(19) Europäisches Patentamt
European Patent Office
Office européen des brevets

(11) EP 4 441 132 B1

(12) EUROPÄISCHE PATENTSCHRIFT

(45) Veröffentlichungstag und Bekanntmachung des Hinweises auf die Patenterteilung:
**14.01.2026 Patentblatt 2026/03**

(21) Anmeldenummer: **22814328.5**

(22) Anmeldetag: **07.11.2022**

(51) Internationale Patentklassifikation (IPC):
***C08K 3/32*** *(2006.01)* ***C08K 5/00*** *(2006.01)*
***C08K 5/18*** *(2006.01)* ***C08K 5/523*** *(2006.01)*
***C08K 5/5313*** *(2006.01)* ***C08K 7/14*** *(2006.01)*
***C08K 5/526*** *(2006.01)*

(52) Gemeinsame Patentklassifikation (CPC):
(C-Sets verfügbar)
**C08K 5/526; C08K 3/32; C08K 5/0066; C08K 5/18; C08K 5/5313; C08K 7/14** (Forts.)

(86) Internationale Anmeldenummer:
**PCT/EP2022/081012**

(87) Internationale Veröffentlichungsnummer:
**WO 2023/099128 (08.06.2023 Gazette 2023/23)**

(54) **POLYAMID BASIERTE ERZEUGNISSE**
POLYAMIDE-BASED PRODUCTS
PRODUITS À BASE DE POLYAMIDE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **01.12.2021 EP 21211672**

(43) Veröffentlichungstag der Anmeldung:
**09.10.2024 Patentblatt 2024/41**

(73) Patentinhaber: **Envalior Deutschland GmbH
40474 Düsseldorf (DE)**

(72) Erfinder:
- **GAU, Elisabeth
40474 DÜSSELDORF (DE)**
- **CAUDAL, Jan
40474 DÜSSELDORF (DE)**
- **RUDOLF, Marc
40474 DÜSSELDORF (DE)**
- **JOACHIMI, Detlev
40474 DÜSSELDORF (DE)**
- **ENDTNER, Jochen
40474 DÜSSELDORF (DE)**
- **KOERTE, Leif Arne
40474 DÜSSELDORF (DE)**
- **BIENMÜLLER, Matthias
40474 DÜSSELDORF (DE)**

(74) Vertreter: **Envalior Association
Urmonderbaan 22
6167 RD Geleen (NL)**

(56) Entgegenhaltungen:
**WO-A1-2018/202791 WO-A1-2020/169547
GB-A- 2 584 307 US-A- 5 945 469**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)

C-Sets
**C08K 3/32, C08L 77/02;**
**C08K 3/32, C08L 77/10;**
**C08K 5/0066, C08L 77/02;**
**C08K 5/0066, C08L 77/10;**
**C08K 5/18, C08L 77/02;**
**C08K 5/18, C08L 77/10;**
**C08K 5/526, C08L 77/02;**
**C08K 5/526, C08L 77/10;**
**C08K 5/5313, C08L 77/02;**
**C08K 5/5313, C08L 77/10;**
**C08K 7/14, C08L 77/02;**
**C08K 7/14, C08L 77/10**

## Beschreibung

Die vorliegende Erfindung betrifft glasfaserverstärkte Polyamid basierte Erzeugnisse sowie die Verwendung von Mischungen enthaltend wenigstens ein sekundäres aromatisches Amin, wenigstens ein Phosphinsäurederivat sowie Bis(2,4-di-t-butylphenyl)-pentaerythritoldiphosphit und die Verwendung von Letzterem als Additiv zur Verbesserung des Alterungsverhaltens in Form eines verbesserten Erhalts der Bruchdehnung und der Schlagzähigkeit, eines verbesserten Farberhalts bzw. einer verbesserten Farbstabilität, sowie gleichzeitig verbesserter UV-Stabilität nach Thermoalterung im Vergleich zu glasfaserverstärkten Polyamid basierten Erzeugnissen ohne diese Mischung.

Elastizität und Reißfestigkeit sind Gründe für den vielseitigen Einsatz von Polyamiden. Wegen ihrer Festigkeit und Steifigkeit sowie ihrer Beständigkeit gegenüber organischen Lösungsmitteln, wie Alkoholen, Aceton, Benzol sowie Kraftstoffen, sind sie auch für andere Industriebereiche, vor allem für den Automobilbereich, interessant. Kraftstoffschläuche aus Polyamiden sind für den Kraftfahrzeugbau heute ebenso unverzichtbar wie viele andere Bauteile aus Polyamiden, die Metalle, wie Aluminium oder Stahl, ersetzen und damit bei gleichbleibenden Eigenschaften erhebliche Gewichtsersparungen ermöglichen.

Laut **https://de.wikipedia.org/wiki/Polyamide** haben Polyamide eine relativ niedrige Glastemperatur. Die Glastemperaturen für Polyamid 6, Polyamid 6.6, Polyamid 6.10, Polyamid 6.12, Polyamid 11 oder Polyamid 12 liegen alle im Bereich von 37 bis 60°C. Um eine höhere Steifigkeit und Härte sowie eine bessere Chemikalien- und Hydrolysebeständigkeit zu erzielen, werden in Polyamiden Verstärkungsmaterialien, insbesondere Glasfasern, eingesetzt. Zudem kann einer der Nachteile von Polyamiden, die verhältnismäßig hohe Wasseraufnahme, durch den Glasfaserzusatz erheblich reduziert werden. Neben der Erhöhung von Festigkeit und E-Modul steigt durch den Einsatz von Glasfasern auch die Dauergebrauchstemperatur deutlich an, was die Einsatzmöglichkeiten von Polyamiden insbesondere im Automobilbereich deutlich erweitert. Die Einsatzgrenzen reichen in Abhängigkeit vom chemischen Aufbau der Polyamide von etwa -30°C für Polyamid 11 oder -70°C für Polyamid 12 bis über +100°C, kurzfristig sind Temperaturen von etwa 140 bis 180°C und darüber sogar bis zu 280°C im Falle von Polyamid 46 möglich.

Während über viele Jahre der Verbrennungsmotor das dominierende Antriebskonzept darstellte, ergeben sich im Zuge der Suche nach alternativen Antriebskonzepten auch neue Anforderungen hinsichtlich der Materialauswahl. Eine wesentliche Rolle spielt dabei die Elektromobilität, bei welcher der Verbrennungsmotor in Hybridfahrzeugen teilweise oder in Elektromobilen vollständig durch einen oder mehrere Elektromotoren ersetzt wird, die ihre elektrische Energie typischerweise aus Batterien oder Brennstoffzellen beziehen. Während konventionelle Fahrzeuge mit Verbrennungsmotor als alleinigem Antrieb typischerweise mit einem Bordspannungsnetz von 12V auskommen, werden in Hybrid- und Elektrofahrzeugen mit Elektromotoren als Antriebseinheit wesentlich höhere Spannungen benötigt. Dies stellt für den direkten Bereich und die unmittelbare Umgebung von derartig spannungsführenden Komponenten ein ernstzunehmendes zusätzliches Gefahrenpotential dar, was in technischen Spezifikationen oder auch normativ zunehmend eine Rolle spielt. Eine wichtige Rolle spielt dabei die eindeutige Kennzeichnung dieser Hochvolt Gefährdungsbereiche, um auf diese Weise einen unbeabsichtigten Kontakt mit einem Menschen, insbesondere Fahrer oder Mechaniker, zu vermeiden, wobei wiederum die eindeutige farbliche Kennzeichnung, insbesondere die farbliche Kennzeichnung in orange, von Polyamid basierten Erzeugnissen in Hochvoltanwendungen eine besonders wichtige Rolle spielt. Die deutsche gesetzliche Unfallversicherung DGUV beschreibt in ihrer Information BGI / GUV-I 8686 zur "Qualifizierung für Arbeiten an Fahrzeugen mit Hochvoltsystemen" den Begriff Hochvolt, insbesondere bei Hybrid- und Brennstoffzellentechnologie sowie Elektrofahrzeugen, umfassend Spannungen >60 V und <1500V für den Gleichspannungsbereich und >30V und 1000V für Wechselspannung.

Allerdings unterliegen Polyamid basierte Erzeugnisse bei Einwirkung äußerer Einflüsse, insbesondere von Licht, UV-Strahlen, Wärme oder widrigen Wetterbedingungen, Abbauerscheinungen. Abbauerscheinungen treten insbesondere infolge des Einwirkens hoher Temperaturen auf. Das Ergebnis solcher Abbauerscheinungen wird im Allgemeinen in Form eines Verlusts der mechanischen Eigenschaften, vorzugsweise der Schlagzähigkeit und der Bruchdehnung und insbesondere als Verfärbung wahrgenommen. Gerade aber Abbauprozesse in Form unerwünschter Verfärbungen sind im Falle verstärkter und eingefärbter Polyamid basierter Erzeugnisse, insbesondere orange eingefärbter Polyamid basierter Erzeugnisse im Hochvoltbereich unerwünscht, da eine eindeutige und gleichbleibende farbliche Kennzeichnung über die Einsatzdauer, z. B. in Kraftfahrzeugen, nicht gewährleistet ist.

Anwendungen Polyamid basierter Erzeugnisse im Automobilbereich, vorzugsweise Anwendungen in der E-Mobilität, insbesondere im Hochvoltbereich wie Ladestecker, erfordern neben Anforderungen wie Steifigkeit in Form des E-Moduls, auch eine gute Schlagzähigkeit. So können Polyamid basierte Erzeugnisse für die Anwendung im Hochvoltbereich beim Ein- und Ausbau sowie im Gebrauch im Kraftfahrzeug hohen mechanischen Kräften ausgesetzt sein und dürfen dabei nicht zerbrechen. Auch der Erhalt der Schlagzähigkeit über die Fahrzeuglebensdauer muss gewährleitet sein.

Die Lösung des Stands der Technik gemäß Kunststoffhandbuch 3/4, Technische Thermoplaste, Polyamide, Karl Hansen Verlag, München, Wien, 1998, S16 und S. 148-150 zur Verbesserung der Schlagzähigkeit von Polyamid basierten Zusammensetzungen ist der Einsatz von amorphen Kunststoffen wie ABS oder Elastomeren in Polyamid

basierten Blends. Polymere, die in anderen Polymeren wie Polyamid zur Erhöhung der Schlagzähigkeit eingesetzt werden, werden in der Fachsprache als Modifikatoren oder Schlagzähmodifikatoren bezeichnet und sind erfindungsgemäß als Schlagzähmodifikatoren zu bezeichnen. Für Polyamid geeignete Schlagzähmodifikatoren sind Ethylen-Propylen-Kautschuke (EPM, EPR) oder Ethylen-Propylen-Dien-Kautschuke (EPDM), styrolhaltige Elastomere, z. B. SEBS, SBS, SEPS, oder Acrylatkautschuke. Als Schlagzähmodifikatoren sind aber auch Nitril-Kautschuke (NBR, H-NBR), Siliconkautschuke, EVA und Microgele, wie sie in der WO 2005/033185 A1 beschrieben sind, geeignet. Untersuchungen im Rahmen der Dissertation von S. Moll zu "Untersuchung der Auswirkungen einer thermisch-oxidativen Beanspruchung auf das Emissionsverhalten von ABS und PP und der Korrelation mit dem Alterungsgrad" aus 2016 zeigten aber, dass sich Poly-(Acrylnitril-Butadien-Styrol) "ABS" unter thermisch-oxidativer Belastung verfärbt. Zusätzlich ist dem Fachmann bekannt, dass sich durch Hinzufügen eines Schlagzähmodifikators die Steifigkeit in Form des E-Moduls, verschiedentlich auch als Zugmodul bezeichnet, verringert **(**Kunststoffhandbuch 3/4, Technische Thermoplaste, Polyamide, Karl Hansen Verlag, München, Wien, 1998, S16 und S. 157**).** Deshalb erscheinen die im Stand der Technik beschriebenen und typischerweise in Polyamid einzusetzenden Schlagzähmodifikatoren ungeeignet, insbesondere wenn farblich gekennzeichnete Polyamid basierte Komponenten nicht zu Verfärbungen neigen sollen.

Die Schlagzähigkeit wird berechnet als das Verhältnis aus Schlagarbeit und Probenkörperquerschnitt (Maßeinheit: $kJ/m^2$). Durch verschiedene Arten des Schlagbiegeversuchs, sei es nach Charpy gemäß **DIN EN ISO 179,** oder nach Izod gemäß **DIN EN ISO 180,** kann die Schlagzähigkeit bestimmt werden. Gemessen wird die Schlagzähigkeit im Rahmen der vorliegenden Erfindung nach **ISO180-1U** an spritzgegossenen Probekörpern ($80\cdot10\cdot4$ $mm^3$) bei 23°C im spritzfrischen Zustand.

Dem Fachmann ist bekannt, dass der Glasfasergehalt einen Einfluss auf die Schlagzähigkeit einer Polyamidzusammensetzung bzw. auf daraus herzustellende Erzeugnisse hat **(**Glasfaserverstärkte Kunststoffe, P.H. Selden, Springer-Verlag Berlin, Heidelberg, New York, 1967, Seite 324 bis 325**).** Daher kann die schlagzähverbessernde Wirkung eines Schlagzähmodifikators, bzw. eines die Schlagzähigkeit verbessernden Additivs nur bei gleichem Glasfasergehalt verglichen werden.

Die Bruchdehnung (Maßeinheit %) stellt einen Indikator für die Verformungsfähigkeit eines Kunststoffes dar und ist laut **DIN EN ISO 527** der zuletzt aufgezeichnete Dehnungswert, bevor ein Spannungsabfall auf weniger als oder gleich 10% des Festigkeitswerts im Zugversuch erfolgt. Gemessen wird die Bruchdehnung im Rahmen der vorliegenden Erfindung nach **DIN EN ISO 527** an spritzgegossenen Probekörpern ($170\cdot10\cdot4$ $mm^3$, Zugstab Typ 1A) bei 23°C im spritzfrischen Zustand.

Zusammengefasst sind die Anforderungen an Polyamid basierte Erzeugnisse in Anwendungen in der E-Mobilität, insbesondere im Hochvoltbereich, vielseitig. Neben einer erhöhten Schlagzähigkeit müssen sowohl die farbliche Kennzeichnung, als auch die mechanischen Eigenschaften wie die Schlagzähigkeit und die Bruchdehnung über die Fahrzeuglebensdauer gewährleistet sein. Der Stand der Technik, die Schlagzähigkeit durch den Einsatz von Schlagzähmodifikatoren zu verbessern, ist nicht geeignet, da diese unter thermisch-oxidativer Belastung zu Verfärbungen der Polyamidzusammensetzung bzw. daraus herzustellender Erzeugnisse führen.

Zusammensetzungen gemäß EP 3 919 562 A1 enthaltend wenigstens ein sekundäres aromatisches Amin sowie wenigstens ein Phosphinsäurederivat eignen sich zur Herstellung Polyamid basierter Erzeugnisse mit verbesserter Farbstabilität und verbessertem Schlagzähigkeitserhalt nach Thermoalterung. Jedoch weisen diese Erzeugnisse eine unzureichende UV-Stabilität auf und der Erhalt der Bruchdehnung nach 500 h Thermoalterung bei 150°C ist für Anwendungen im Kraftfahrzeugbereich unbefriedigend.

Die Aufgabe der vorliegenden Erfindung bestand daher in der Bereitstellung glasfaserverstärkter Polyamid basierter Zusammensetzungen bzw. daraus herzustellender Erzeugnisse, die ein gutes Alterungsverhalten in Form eines verbesserten Farberhalts bzw. in Form einer verbesserten Farbstabilität nach Heißluftalterung sowie gleichzeitig eine verbesserte UV-Stabilität und zudem ein gutes Alterungsverhalten in Form eines ausreichenden Erhalts der Schlagzähigkeit und vor allem der Bruchdehnung nach Heißluftalterung aufweisen.

Unter einem guten Alterungsverhalten in Form eines verbesserten Farberhalts bzw. einer verbesserten Farbstabilität nach Heißluftalterung wird erfindungsgemäß verstanden, dass der Farbabstand $\Delta E$ berechnet gemäß **DIN EN ISO 11664-4** nach Heißluftlagerung über 500 h bei 150°C gering ausfällt, vorzugsweise der Farbabstand $\Delta E$ im Bereich von 0 bis 20 liegt, besonders bevorzugt der Farbabstand $\Delta E$ im Bereich von 0 bis 15 liegt. Im Rahmen der vorliegenden Erfindung bedeutet deshalb ein im Vergleich zum Stand der Technik kleinerer $\Delta E$ Wert eine geringe Farbänderung. Würde sich die Farbe nach der Lagerung überhaupt nicht ändern entspräche dies einem $\Delta E = 0$.

Unter einem guten Alterungsverhalten in Form einer verbesserten UV-Stabilität wird erfindungsgemäß verstanden, dass der Farbabstand $\Delta E$ berechnet gemäß **DIN EN ISO 11664-4** nach UV-Lagerung gemäß **DIN ISO 4892-2A** über 200h bei 80°C, 340 nm und 1,55 $W/m^2$ ohne Beregnung gering ausfällt, vorzugsweise der Farbabstand $\Delta E$ im Bereich von 0 bis 30 liegt, besonders bevorzugt der Farbabstand $\Delta E$ im Bereich von 0 bis 20 liegt. Im Rahmen der vorliegenden Erfindung bedeutet deshalb ein im Vergleich zum Stand der Technik kleinerer $\Delta E$ Wert eine geringe Farbänderung. Würde sich die Farbe nach der Lagerung überhaupt nicht ändern entspräche dies einem $\Delta E = 0$.

Unter einem guten Alterungsverhalten in Form eines ausreichenden Erhalts der Schlagzähigkeit nach Heißluftalterung wird erfindungsgemäß verstanden, dass die Schlagzähigkeit einer Probe gemessen nach **ISO180-1U** nach Heißluftalterung über 500h bei 150°C nicht mehr als 50% im Vergleich zum Zeitpunkt bei 0 h abfällt.

Unter einem guten Alterungsverhalten in Form eines ausreichenden Erhalts der Bruchdehnung nach Heißluftalterung wird erfindungsgemäß verstanden, dass die Bruchdehnung gemessen nach **DIN EN ISO 527** nach Heißluftalterung über 500h bei 150°C nicht mehr als 30% im Vergleich zum Zeitpunkt bei 0 h abfällt.

Die Lösung dieser komplexen Aufgabe für glasfaserverstärkte Polyamide ist die Verwendung von Mischungen enthaltend wenigstens ein sekundäres aromatisches Amin, wenigstens ein Phosphinsäurederivat sowie Bis(2,4-di-t-butylphenyl)pentaerythritoldiphosphit.

Gegenstand der vorliegenden Erfindung sind **Zusammensetzungen** sowie **Erzeugnisse** enthaltend

a) wenigstens ein Polyamid, vorzugsweise Polyamid 6 oder Polyamid 66,

b) wenigstens ein sekundäres aromatisches Amin,

c) wenigstens einem Phosphinsäurederivat der allgemeinen Formel (I),

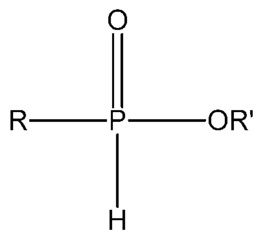

(I)

worin R für ein Wasserstoffatom oder für eine Alkyl-, Cycloalkyl- oder Aryl-Gruppe steht, und
R' für ein Alkalimetall, ein Erdalkalimetall, ein Metall der 12. und 13. Gruppe des Periodensystems der Elemente, ein Ammonium-Ion oder für eine $C_1$-$C_{10}$Alkylgruppe steht,

d) Bis(2,4-di-t-butylphenyl)pentaerythritoldiphosphit, und

e) Glasfasern,

mit der Maßgabe, dass auf 100 Massenanteile der Komponente a)

0,1 bis 3 Massenanteile, bevorzugt 0,3 bis 2 Massenanteile, besonders bevorzugt 0,35 bis 1.5 Massenanteile der Komponente b),

0,01 bis 3 Massenanteile, bevorzugt 0,05 bis 2 Massenanteile, besonders bevorzugt 0,1 bis 1,7 Massenanteile der Komponente c),

0,01 bis 3 Massenanteile, bevorzugt 0,05 bis 1 Massenanteile, der Komponente d), und

5 bis 200 Massenanteile, bevorzugt 15 bis 160 Massenanteile, besonders bevorzugt 30 bis 150 Massenanteile, der Komponente e) eingesetzt werden.

Das Ammonium-Ion $NH_4^+$ für R' in Formel (I) ist ein Kation, das mit Anionen ähnlich wie Alkalimetall-Ionen Salze bildet. Es ist die konjugierte Säure zur Base Ammoniak ($NH_3$).

Überraschenderweise zeigen erfindungsgemäße glasfaserverstärkte Polyamidzusammensetzungen bzw. darauf basierende Erzeugnisse enthaltend die Komponenten b), c) und d) neben einem guten Alterungsverhalten in Form eines verbesserten Farberhalts bzw. einer verbesserten Farbstabilität nach Heißluftalterung bei gleichzeitig verbesserter UV-Stabilität auch ein gutes Alterungsverhalten in Form eines verbesserten Erhalts der Schlagzähigkeit sowie der Bruchdehnung nach Heißluftalterung im Vergleich zu glasfaserverstärkten Polyamidzusammensetzungen bzw. auf diesen basierenden Erzeugnissen enthaltend die Komponenten b) und c) jedoch ohne die Komponente d). Die vielseitigen oben beschriebenen Anforderungen an glasfaserverstärkte Polyamid basierte Erzeugnisse für Anwendungen in der E-Mobilität werden somit durch die Kombination der Komponenten b) und c) sowie zusätzlich durch Bis(2,4-di-t-butylphenyl)-pentaerythritoldiphosphit erfüllt.

Dem Fachmann ist aus P. H. Selden, Glasfaserverstärkte Kunststoffe, Seiten 324-325, Kapitel "Glasfaserverstärkte Thermoplaste" von K. Schlichting, Springer Verlag Berlin 1967 bekannt, dass der Glasfasergehalt einen Einfluss auf die Schlagzähigkeit einer Polyamidzusammensetzung hat. Da also Verstärkungsmaterialien, insbesondere Glasfasern, selbst die Schlagzähigkeit von Polyamiden beeinflussen, beziehen sich vergleichende Aussagen im Rahmen der vorliegenden Erfindung stets auf Zusammensetzungen oder Erzeugnisse mit demselben Gehalt an Verstärkungsmaterialien, insbesondere Glasfasern. Diese Aussage betrifft auch erfindungsgemäße Verfahren und Verwendungen.

Die Erfindung betrifft ferner die **Verwendung** von Mischungen enthaltend

b) wenigstens ein sekundäres aromatisches Amin,

c) wenigstens ein Phosphinsäurederivat der allgemeinen Formel (I)

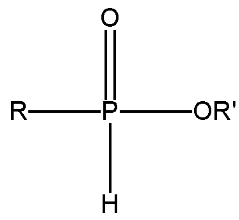

(I)

worin R für ein Wasserstoffatom oder für eine Alkyl-, Cycloalkyl- oder Aryl-Gruppe steht, und R' für ein Alkalimetall, ein Erdalkalimetall, ein Metall der 12. oder 13. Gruppe des Periodensystems der Elemente, ein Ammonium-Ion oder für eine $C_1$-$C_{10}$ Alkylgruppe steht, und

zur Herstellung glasfaserverstärkter Polyamid basierter Erzeugnisse mit geringer Farbänderung ΔE berechnet gemäß **DIN EN ISO 11664-4** nach Heißluftlagerung über 500h bei 150°C und/oder geringer Farbänderung ΔE berechnet gemäß **DIN EN ISO 11664-4** nach UV-Lagerung gemäß **DIN ISO 4892-2A** über 200h bei 80°C, 340 nm und 1,55 W/$m^2$ ohne Beregnung und/oder Erhalt der Schlagzähigkeit gemessen nach **ISO180-1U** und/oder Erhalt der Bruchdehnung gemessen nach **ISO 527** nach Heißluftalterung über 500h bei 150°C mit der Maßgabe, dass auf 100 Massenanteile wenigstens eines mit 5 bis 200 Massenanteilen, bevorzugt 15 bis 160 Massenanteilen, besonders bevorzugt 30 bis 150 Massenanteilen als Komponente e) einzusetzenden Glasfasern verstärkten und als Komponente a) einzusetzenden Polyamids, vorzugsweise Polyamid 6 oder Polyamid 66,

0,1 bis 3 Massenanteile, bevorzugt 0,3 bis 2 Massenanteile, besonders bevorzugt 0,35 bis 1.5 Massenanteile der Komponente b),

0,01 bis 3 Massenanteile, bevorzugt 0,05 bis 2 Massenanteile, besonders bevorzugt 0,1 bis 1,7 Massenanteile der Komponente c), und

0,01 bis 3 Massenanteile, bevorzugt 0,05 bis 1 Massenanteile, Bis(2,4-di-t-butylphenyl)pentaerythritoldiphosphit als Komponente d) eingesetzt werden.

Die Erfindung betrifft schließlich ein **Verfahren** zur Verringerung einer Farbänderung ΔE berechnet gemäß **DIN EN ISO 11664-4** über 500h bei 150°C und/oder zur Verringerung einer Farbänderung ΔE berechnet gemäß **DIN EN ISO 11664-4** nach UV-Bestrahlung gemäß **DIN ISO 4892-2A** über 200h bei 80°C, 340 nm und 1,55 W/$m^2$ ohne Beregnung und/oder zum Erhalt der nach **ISO180-1U** zu bestimmenden Schlagzähigkeit und/oder zum Erhalt der nach ISO 527 zu bestimmenden Bruchdehnung nach Heißluftalterung über 500h bei 140°C, indem man Mischungen enthaltend

b) wenigstens ein sekundäres aromatisches Amin,

c) wenigstens ein Phosphinsäurederivat der allgemeinen Formel (I)

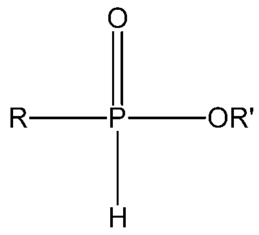

(I)

worin R für ein Wasserstoffatom oder für eine Alkyl-, Cycloalkyl- oder Aryl-Gruppe steht, und R' für ein Alkalimetall, ein Erdalkalimetall, ein Metall der 12. oder 13. Gruppe des Periodensystems der Elemente, ein Ammonium-Ion oder für eine $C_1$-$C_{10}$ Alkylgruppe steht, und

d) Bis(2,4-di-t-butylphenyl)pentaerythritoldiphosphit,

in glasfaserverstärkten Polyamid basierten Erzeugnissen einsetzt mit der Maßgabe,

dass man auf 100 Massenanteile wenigstens eines als Komponente a) einzusetzenden Polyamids, vorzugsweise Polyamid 6 oder Polyamid 66, und 5 bis 200 Massenanteilen, bevorzugt 15 bis 160 Massenanteilen, besonders bevorzugt 30 bis 150 Massenanteilen der als Komponente e) einzusetzenden Glasfasern

0,1 bis 3 Massenanteile, bevorzugt 0,3 bis 2 Massenanteile, besonders bevorzugt 0,35 bis 1.5 Massenanteile der Komponente b),

0,01 bis 3 Massenanteile, bevorzugt 0,05 bis 2 Massenanteile, besonders bevorzugt 0,1 bis 1,7 Massenanteile der Komponente c),

0,01 bis 3 Massenanteile, bevorzugt 0,05 bis 1 Massenanteile, der Komponente d) einsetzt.

Das Ammonium-Ion $NH_4^+$ für R' in Formel (I) ist im Falle der erfindungsgemäßen Verwendungen und Verfahren ein Kation, das mit Anionen ähnlich wie Alkalimetall-Ionen Salze bildet. Es ist die konjugierte Säure zur Base Ammoniak ($NH_3$).

Zur Klarstellung sei angemerkt, dass im Rahmen der vorliegenden Erfindung hinsichtlich der erfindungsgemäßen Zusammensetzungen, der erfindungsgemäßen Erzeugnisse, der erfindungsgemäßen Verwendungen und der erfindungsgemäßen Verfahren die Prüfung auf Schlagzähigkeit nach **ISO 180-1U** (Izod) sowie die Prüfung der Bruchdehnung nach **ISO 527** an spritzgegossenen nach **DIN EN ISO 1874-2** festgelegten Prüfkörpern im spritzfrischen Zustand bei 23°C durchgeführt wurde und durchzuführen ist. Der spritzfrische Zustand, auch "dry as moulded", wird in der **DIN EN ISO 1874-2** definiert.

Zur Klarstellung sei zudem angemerkt, dass im Rahmen der vorliegenden Erfindung die Prüfung des Alterungsverhaltens hinsichtlich der erfindungsgemäßen Zusammensetzungen, der erfindungsgemäßen Erzeugnisse, der erfindungsgemäßen Verwendungen und der erfindungsgemäßen Verfahren in Form eines Erhalts der Schlagzähigkeit durch Lagerung von spritzgegossenen nach **DIN EN ISO 1874-2** festgelegten Prüfkörpern in einem Materialprüfschrank des Modells Binder FP115 bei Umluft bei Temperaturen von 150°C über 500h erfolgte. Die Schlagzähigkeit wurde im Rahmen der vorliegenden Erfindung an den im Rahmen der vorliegenden Erfindung hergestellten Probekörpern deshalb sowohl vor (im spritzfrischem Zustand), als auch nach der Lagerung gemäß **ISO 180-1U** bei 23°C bestimmt und der Differenzwert ermittelt. Die Bruchdehnung wurde im Rahmen der vorliegenden Erfindung entsprechend an diesen Probekörpern sowohl vor (im spritzfrischem Zustand), als auch nach der Wärmealterung gemäß **ISO 527** bestimmt und der Differenzwert ermittelt.

Der Lab-Farbraum (auch: CIELAB, CIEL*a*b*, Lab-Farben) beschreibt alle wahrnehmbaren Farben. Er nutzt einen dreidimensionalen Farbenraum, bei dem der Helligkeitswert L* senkrecht auf der Farbebene (a,b) steht. Die L*-Achse beschreibt die Helligkeit (Luminanz) der Farbe mit Werten von 0 bis 100. In der Darstellung steht diese im Nullpunkt senkrecht auf der a*b*-Ebene. Sie kann auch als Neutralgrauachse bezeichnet werden, denn zwischen den Endpunkten Schwarz (L*=0) und Weiß (L*=100) sind alle unbunten Farben (Grautöne) enthalten. In Analogie zur Gegenfarbtheorie von Ewald Hering gibt die a-Koordinate die Farbart und Farbintensität zwischen Grün und Rot an und die b-Koordinate die Farbart und die Farbintensität zwischen Blau und Gelb. Je größer positive a- und b- und je kleiner negative a- und b-Werte, umso intensiver der Farbton. Falls a=0 und b=0, liegt ein unbunter Farbton auf der Helligkeitsachse vor. In den üblichen Softwareumsetzungen kann L* Werte zwischen 0 und 100 annehmen und a und b können zwischen -128 und 127 variiert werden. Die Verfärbung von Polymer basierten Erzeugnisses durch die oxidative Schädigung der Polymermatrix kann

durch die Messung des Farbabstands ΔE über die Lagerungszeit bei hoher Temperatur bestimmt werden. Der Farbabstand ΔE zwischen zwei Farbreizen wird nach der Gleichung $\Delta E = [(\Delta L^*)^2+(\Delta a^*)^2+(\Delta b^*)^2]^{1/2}$ gemäß **DIN EN ISO 11664-4** berechnet. Zur Klarstellung sei deshalb auch angemerkt, dass im Rahmen der vorliegenden Erfindung die Prüfung des Alterungsverhaltens hinsichtlich der erfindungsgemäßen Zusammensetzungen, der erfindungsgemäßen Erzeugnisse, der erfindungsgemäßen Verwendungen und der erfindungsgemäßen Verfahren in Form eines verbesserten Farberhalts / einer verbesserten Farbstabilität durch Lagerung von spritzgegossenen Platten von 60mm • 40mm • 4 mm in einem Materialprüfschrank des Modells Binder FP115 bei Umluft bei Temperaturen von 150°C, im folgenden Heißluftalterung genannt, erfolgt(e). Als Maß für die Verfärbung wird im Rahmen der vorliegenden Erfindung der Farbabstand ΔE von spritzgegossenen Erzeugnissen auf Basis erfindungsgemäßer Polymerzusammensetzungen vor und nach Heißluftalterung über die Messung der Farbwerte L*a*b* bestimmt.

$$\Delta E = [(\Delta L^*)^2+(\Delta a^*)^2+(\Delta b^*)^2]^{1/2}$$

Somit zeichnet sich erfindungsgemäß ein gutes Alterungsverhalten in Form eines verbesserten Farberhalts bzw. einer verbesserten Farbstabilität nach Heißluftalterung dadurch aus, dass die Farbänderung ΔE geringer ausfällt. Die Farbwerte L*a*b* der Proben werden im Rahmen der vorliegenden Erfindung an Platten der Größe 60mm • 40mm • 4 mm bestimmt und daraus nach **DIN EN ISO 11664-4** der Farbabstand ΔE berechnet. Auch in Bezug auf die **Verwendung** bzw. des **Verfahren** bedeutet geringer, dass der Farbabstand ΔE vorzugsweise im Bereich von 0 bis 20 liegt, besonders im Bereich von 0 bis 15 liegt. Ein kleiner ΔE Wert bedeutet im Rahmen der vorliegenden Erfindung eine geringe Farbänderung. Wenn sich die Farbe nach der Lagerung überhaupt nicht ändern würde, wäre das ΔE = 0.

Zur Klarstellung sei auch angemerkt, dass im Rahmen der vorliegenden Erfindung die Prüfung des Alterungsverhaltens hinsichtlich der erfindungsgemäßen Zusammensetzungen, der erfindungsgemäßen Erzeugnisse, der erfindungsgemäßen Verwendungen und der erfindungsgemäßen Verfahren in Form einer verbesserten UV-Stabilität im Vergleich zu glasfaserverstärkten Polyamid basierten Erzeugnissen enthaltend die Komponenten b) und c) jedoch ohne die Komponente d) durch Lagerung von spritzgegossenen Platten von 60mm • 40mm • 4 mm in einem QUV Schnellbewitterungsgerät der Firma Q-Lab gemäß **DIN ISO 4892-2A** über 200h bei 80°C, 340 nm und 1,55 $W/m^2$ ohne Beregnung, im Folgenden abgekürzt als UV-Lagerung bezeichnet, erfolgt(e). Als Maß für die Verfärbung wird im Rahmen der vorliegenden Erfindung dann der Farbabstand ΔE von spritzgegossenen Erzeugnissen auf Basis erfindungsgemäßer Polymerzusammensetzungen vor und nach UV-Lagerung von 200 h durch die Messung der Farbwerte L*a*b* bestimmt.

$$\Delta E = [(\Delta L^*)^2+(\Delta a^*)^2+(\Delta b^*)^2]^{1/2}$$

Somit zeichnet sich erfindungsgemäß ein gutes Alterungsverhalten in Form einer verbesserten UV-Stabilität nach UV-Lagerung in einem QUV Schnellbewitterungsgerät dadurch aus, dass die Farbänderung ΔE kleiner im Vergleich zu Polyamid basierten Erzeugnissen ohne Komponente d) ausfällt und der Farbabstand ΔE im Bereich von 0 bis 30 liegt, besonders bevorzugt im Bereich von 0 bis 20 liegt. Auch in Bezug auf die **Verwendung** bzw. des **Verfahren** bedeutet geringer, dass der Farbabstand ΔE vorzugsweise im Bereich von 0 bis 30 liegt, besonders im Bereich von 0 bis 20 liegt.

Auch in Bezug auf die **Verwendung** bzw. das **Verfahren** bedeutet ein gutes Alterungsverhalten in Form eines ausreichenden Erhalts der Schlagzähigkeit nach Heißluftalterung, dass die Schlagzähigkeit einer Probe gemessen nach **ISO180-1U** nach Heißluftalterung über 500h bei 150°C nicht mehr als 50% im Vergleich zum Zeitpunkt bei 0 h abfällt.

Auch in Bezug auf die **Verwendung** bzw. das **Verfahren** bedeutet ein gutes Alterungsverhalten in Form eines ausreichenden Erhalts der Bruchdehnung nach Heißluftalterung, dass die Bruchdehnung einer Probe gemessen nach **ISO 527** nach Heißluftalterung über 500h bei 150°C nicht mehr als 30% im Vergleich zum Zeitpunkt bei 0 h abfällt.

Zur Klarstellung sei ferner angemerkt, dass vom Rahmen der vorliegenden Erfindung hinsichtlich der erfindungsgemäßen Zusammensetzungen, der erfindungsgemäßen Erzeugnisse, der erfindungsgemäßen Verwendungen und der erfindungsgemäßen Verfahren alle aufgeführten allgemeinen oder in Vorzugsbereichen genannten Definitionen und Parameter in beliebigen Kombinationen umfasst sind. Dies betrifft insbesondere auch die einzusetzenden Mengenangaben der einzelnen Komponenten in den im Rahmen der vorliegenden Anmeldung beanspruchten Verfahren und Verwendungen. Die im Rahmen dieser Anmeldung genannten Normen beziehen sich auf die zum Anmeldetag dieser Erfindung geltenden Fassung. Sofern nicht anders angegeben handelt es sich bei Prozentangaben um Gewichtsprozente.

**Bevorzugte Ausführungsformen**

In einer weiteren bevorzugten Ausführungsform betrifft die Erfindung **Zusammensetzungen** sowie **verstärkte Polyamid basierte Erzeugnisse** enthaltend zusätzlich zu den Komponenten a), b), c), d) und e) noch **wenigstens ein Flammschutzmittel als Komponente f)** zu 3 bis 100 Massenanteilen, bevorzugt zu 5 bis 80 Massenanteilen, besonders

bevorzugt zu 10 bis 50 Massenanteilen, jeweils bezogen auf 100 Massenanteile der Komponente a).

Zur Klarstellung sei angemerkt, dass vom Rahmen der vorliegenden Erfindung alle als Komponente f) einzusetzenden Flammschutzmittel sowie die hier genannten Mengenangaben sowohl die Zusammensetzungen, als auch daraus herzustellende Polyamid basierte Erzeugnisse, insbesondere Polyamid basierte Erzeugnisse in Hochvoltanwendungen, betreffen, wie auch auf die erfindungsgemäßen Verwendungen und Verfahren anzuwenden sind.

In einer weiteren Ausführungsform betrifft die Erfindung **Zusammensetzungen** sowie **verstärkte Polyamid basierte Erzeugnisse** enthaltend zusätzlich zu den Komponenten a), b), c), d), e) und f) oder anstelle von f) noch wenigstens ein weiteres von den Komponenten b), c), d), e) und f) **verschiedenes Additiv g),** zu 0,01 bis 80 Massenanteilen, bevorzugt zu 0,05 bis 50 Massenanteilen, besonders bevorzugt zu 0,1 bis 30 Massenanteilen, jeweils bezogen auf 100 Massenanteile der Komponente a).

Zur Klarstellung sei angemerkt, dass vom Rahmen der vorliegenden Erfindung alle als Komponente g) einzusetzenden Additive sowie die hier genannten Mengenangaben sowohl die Polyamid basierten Zusammensetzungen, als auch daraus herzustellende Polyamid basierte Erzeugnisse, insbesondere Polyamid basierte Erzeugnisse in Hochvoltanwendungen, betreffen, wie auch auf die erfindungsgemäßen Verwendungen und Verfahren anzuwenden sind.

**Komponente a)**

Die erfindungsgemäß als Komponente a) einzusetzenden **Polyamide** können nach verschiedenen Verfahren hergestellt und aus unterschiedlichen Bausteinen synthetisiert werden. Zur Herstellung von Polyamiden sind eine Vielzahl von Verfahrensweisen bekannt geworden, wobei je nach gewünschtem Endprodukt unterschiedliche Monomerbausteine, verschiedene Kettenregler zur Einstellung eines angestrebten Molekulargewichts oder auch Monomere mit reaktiven Gruppen für später beabsichtigte Nachbehandlungen eingesetzt werden können.

Die technisch relevanten Verfahren zur Herstellung von Polyamiden laufen meist über die Polykondensation in der Schmelze. In diesem Rahmen wird auch die hydrolytische Polymerisation von Lactamen als Polykondensation verstanden.

Als Edukte kommen aliphatische und/oder aromatische Dicarbonsäuren wie Adipinsäure, 2,2,4- und 2,4,4-Trimethyladipinsäure, Azelainsäure, Sebazinsäure, Isophthalsäure, Terephthalsäure, aliphatische und/oder aromatische Diamine wie z. B. Tetramethylendiamin, Hexamethylendiamin, 1,9-Nonandiamin, 2,2,4- und 2,4,4-Trimethylhexamethylendiamin, die isomeren Diaminodicyclohexylmethan, Diaminodicyclohexylpropan, Bisaminomethylcyclohexan, Phenylendiamin, Xylylen-diamin, Aminocarbonsäuren wie z. B. Aminocapronsäure, bzw. die entsprechenden Lactame in Betracht. Besonders bevorzugt werden Caprolactame, insbesondere $\varepsilon$-Caprolactam eingesetzt. Copolyamide aus mehreren der genannten Monomeren sind eingeschlossen.

Bevorzugte Polyamide sind teilkristalline Polyamide, die ausgehend von Diaminen und Dicarbonsäuren und/oder Lactamen mit wenigstens 5 Ringgliedern oder entsprechenden Aminosäuren hergestellt werden können. Die erfindungsgemäß bevorzugt einzusetzenden teilkristallinen Polyamide zeichnen sich gemäß DE 10 2011 084 519 A1 durch eine Schmelzenthalpie von mehr als 25 J/g, gemessen mit der DSC-Methode gemäß **ISO 11357** beim 2. Aufheizen und Integration des Schmelzpeaks, aus.

Als besonders bevorzugte Polyamide werden Polyamid 6, Polyamid 6.6, Polyamid 4.6 und/oder teilaromatische Copolyamide eingesetzt. Bevorzugte teilaromatische Copolyamide sind PA6T/6, PA6T/66, PA6T/6I oder PA6T/6I/66.

Die im Rahmen der vorliegenden Anmeldung benutzte Kennzeichnung der Polyamide entspricht der internationalen Norm **ISO 1874-1,** wobei die erste(n) Ziffer(n) die C-Atomzahl des Ausgangsdiamins und die letzte(n) Ziffer(n) die C-Atomzahl der Dicarbonsäure angeben. Wird nur eine Zahl angegeben, wie im Falle des PA6, so bedeutet dies, dass von einer $\alpha,\omega$- Aminocarbonsäure bzw. von dem davon abgeleiteten Lactam, im Falle des PA 6 also dem $\varepsilon$-Caprolactam, ausgegangen worden ist.

Das erfindungsgemäß insbesondere bevorzugt als Komponente a) einzusetzende Polyamid 6 [CAS Nr. 25038-54-4] hat vorzugsweise eine nach **ISO 307** in 0,5 gew.-%iger Lösung in 96 gew.-%iger Schwefelsäure bei 25°C zu bestimmende Viskositätszahl im Bereich von 80 bis 180 ml/g, besonders bevorzugt im Bereich von 85 bis 170 ml/g und ganz besonders bevorzugt im Bereich von 90 bis 160 ml/g. Erfindungsgemäß bevorzugt als Komponente a) einzusetzendes Polyamid 6 ist beispielswiese als Durethan® B29 bei der Lanxess Deutschland GmbH, Köln erhältlich.

Bevorzugt weist ein als Komponente a) insbesondere bevorzugt einzusetzendes Polyamid 66 [CAS Nr. 32131-17-2] eine nach **ISO 307** in 0,5 gew.-%iger Lösung in 96 gew.-%iger Schwefelsäure bei 25°C zu bestimmende Viskositätszahl im Bereich von 80 bis 180 ml/g auf, ganz besonders bevorzugt eine Viskositätszahl im Bereich von 85 bis 170 ml/g, insbesondere bevorzugt im Bereich von 90 bis 160 ml/g. Erfindungsgemäß als Komponente a) einzusetzendes Polyamid 66 ist beispielsweise als Ultramid® A27E01 bei der BASF SE, Ludwigshafen, erhältlich.

Das erfindungsgemäß als Komponente a) einzusetzende Polyamid kann auch im Gemisch mit wenigstens einem anderen Polyamid oder in Form eines Copolyamids eingesetzt werden.

Dem als Komponente a) einzusetzenden Polyamid können übliche Additive, vorzugsweise dem Fachmann bekannte Entformungsmittel, Stabilisatoren und/oder Fließhilfsmittel, bereits in der Schmelze zugemischt werden.

**Komponente b)**

Erfindungsgemäß wird als Komponente b) wenigstens ein sekundäres aromatisches Amin eingesetzt. Bevorzugt werden sekundäre aromatische Amine der allgemeinen Formel (II)

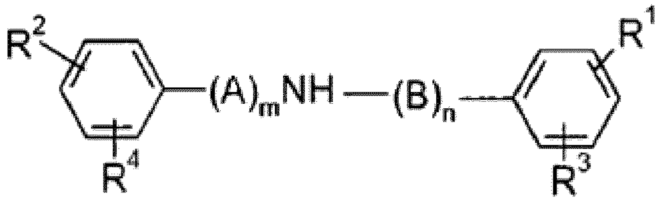

(II)

worin

m und n jeweils unabhängig voneinander für 0 oder 1 stehen,

A und B jeweils unabhängig voneinander für ein mit $C_1$-$C_4$-Alkyl- oder Phenyl-substituiertes tertiäres C-Atom stehen,

$R^1$ und $R^2$ jeweils unabhängig voneinander für Wasserstoff, für eine $C_1$-$C_6$-Alkylgruppe in ortho- und para-Stellung, welche gegeben falls durch 1 bis 3 Phenylreste substituiert sein kann, oder für Halogen, Carboxyl oder ein Metallsalze dieser Carboxylgruppe stehen,

$R^3$ und $R^4$ jeweils unabhängig voneinander für Wasserstoff oder für einen Methylrest in ortho- und para-Stellung stehen, oder für eine tertiäre $C_3$-$C_9$-Alkylgruppe in ortho oder para-Stellung stehen, welche gegebenenfalls durch 1 bis 3 Phenylreste substituiert sein kann.

Bevorzugte Reste A oder B sind in Formel (II) symmetrisch substituierte tertiäre Kohlenstoffatome, wobei dimethylsubstituierter tertiärer Kohlenstoff besonders bevorzugt ist. Ebenso bevorzugt sind tertiäre Kohlenstoffe, die 1 bis 2 Phenylgruppen als Substituenten aufweisen.

Bevorzugte Reste $R^1$ und $R^2$ sind in Formel (II) t-butyl- oder trimethyl-substituierte quartäre Kohlenstoffatome, bei denen die Methylgruppen vorzugweise durch 1 bis 3 Phenylgruppen ersetzt sind, besonders bevorzugt durch eine Phenylgruppe ersetzt sind, oder tetramethylsubstituiertes n-Butyl bei dem die Methylgruppen durch Phenylgruppen ersetzt sein können. Bevorzugte Halogene sind Brom und Chlor. Metallsalze sind vorzugsweise solche, worin in Formel (II) $R^1$ oder $R^2$ Carboxyl Metallsalze bilden.

Bevorzugte Reste $R^3$ und $R^4$ sind in Formel (II) Wasserstoff, sowie ein trimethylsubstituiertes quartäres Kohlenstoffatom in ortho- oder para-Position, bei dem die Methylgruppen vorzugweise durch 1 bis 3 Phenylgruppen ersetzt sind.

Erfindungsgemäß besonders bevorzugte sekundäre aromatische Amine sind auszuwählen aus der Gruppe

4,4'-Bis(α,α'-tertiäroctyl)diphenylamin,

4,4'Bis(α,α'-dimethylbenzyl)diphenylamin,

4-(1,1,3,3-Tetramethylbutyl)4'triphenylmethyldiphenylamin,

4,4'Bis(α,α'-p-trimethylbenzyl)diphenylamin,

2,4,4'Tris(α,α'-p-trimethylbenzyl)diphenylamin,

2,2'-Dibromo,4,4'-bis(α,α'-dimethylbenzyl) diphenylamin,

4,4'-Bis(α,α-dimethylbenzyl)-2-carboxydiphenylamini-nickel-4,4'-bis(α, α-dimethylbenzyl)-diphenylamin,

2-sec-Butyl-4,4'-bis(α,α-dimethylbenzyl)diphenylamin,

4,4'-Bis(α,α-dimethylbenzyl)-2-(α-methlheptyl)diphenylamin,

2-(α-Methylpentyl)4,4'-ditrityldiphenylamin,

4-α,α-Dimethylbenzyl-4'-isopropoxydiphenylamin,

2-(α-Methylheptyl)-4'-(α,α-dimethylbenzyl)diphenylamin,

2-(α-Methylpentyl)-4'- trityldiphenylamin,

4,4'-Bis(tertiary-butyl)diphenylamin,

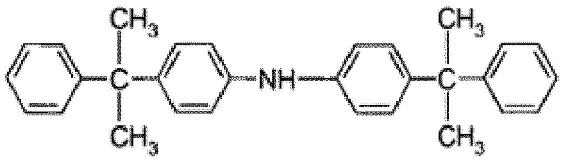

,

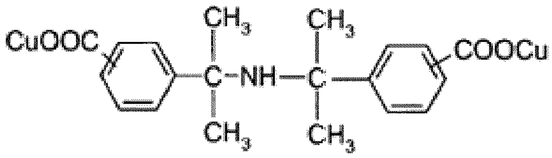

,

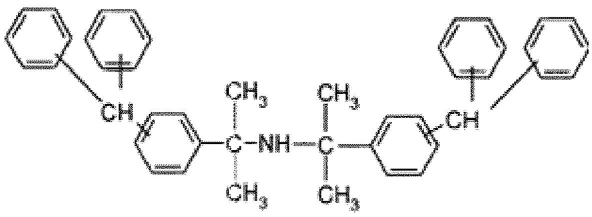

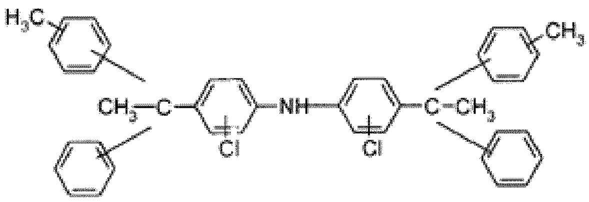

,

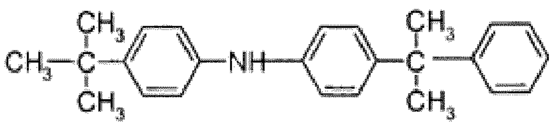

,

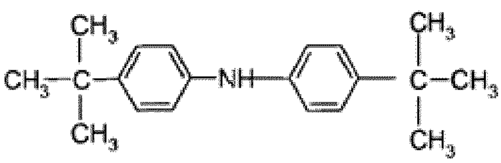

,

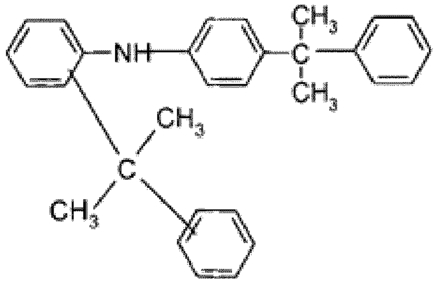

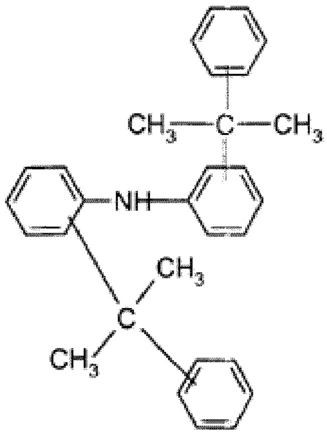

,

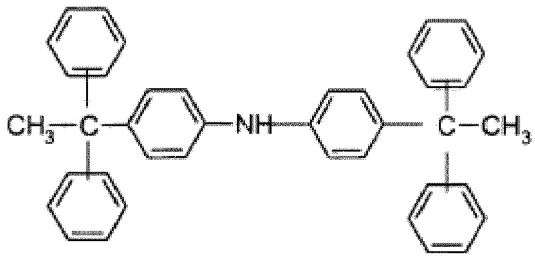

,

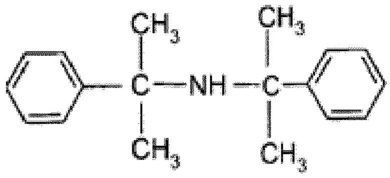

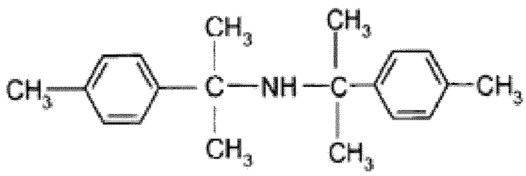

,

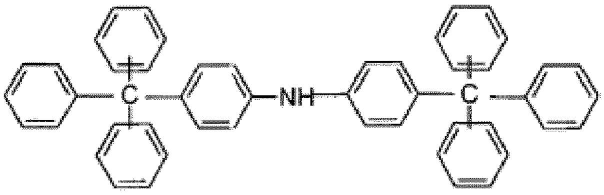

,

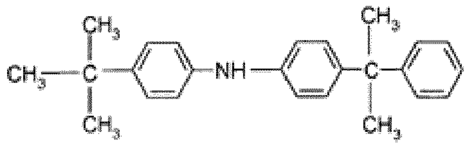

,

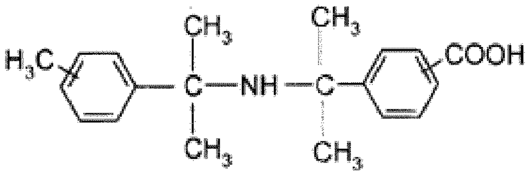

,

und

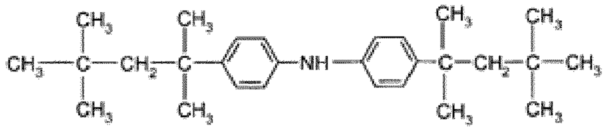

.

Erfindungsgemäß ganz besonders bevorzugt wird als Komponente b) 4,4'Bis(α,α'-dimethylbenzyl)diphenylamin [CAS No. 10081-67-1] eingesetzt, das unter anderem bei der Firma Rialon unter dem Namen Rianox® 445 erworben werden kann.

**Komponente c)**

Als Komponente c) wird wenigstens ein Phosphinsäurederivat der allgemeinen Formel (I) eingesetzt

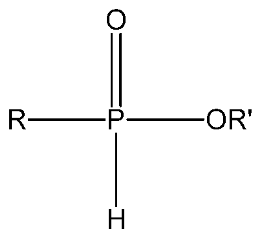

(I)

worin R für ein Wasserstoffatom oder für eine Alkyl-, Cycloalkyl- oder Aryl-Gruppe steht, und R' für ein Alkalimetall, ein Erdalkalimetall, ein Metall der 12. oder 13. Gruppe des Periodensystems der Elemente, ein Ammonium-Ion oder für eine $C_1$-$C_{10}$Alkylgruppe steht.

Wenn R in Formel (I) ein Wasserstoffatom darstellt, handelt es sich um Hypophosphorsäure. Wenn R in Formel (I) eine Alkyl-, Cycloalkyl- oder Aryl-Gruppe darstellt, handelt es sich um eine Phosphinsäure, wobei die Alkyl-, Cycloalkyl- oder Aryl-Gruppe vorzugsweise bis zu 12 Kohlenstoffatome umfasst.

Wenn R in Formel (I) eine Alkyl-, Cycloalkyl- oder Aryl-Gruppe darstellt, werden bevorzugt Salze und Ester der Phoshinsäure eingesetzt. Erfindungsgemäß bevorzugt werden Salze der Phosphinsäure eingesetzt, wobei es sich auch um Hydrate der Salze handeln kann.

Ganz besonders bevorzugt sind Alkali-, Erdalkalimetallsalze sowie Metallsalze der 12. oder 13. Gruppe des Periodensystems der Phosphinsäure, wobei es sich auch um Hydrate der Salze handeln kann.

Wenn R in Formel (I) ein Wasserstoffatom ist, handelt es sich um Hypophosphorsäure, wovon bevorzugt deren Salze oder Ester eingesetzt werden. Besonders bevorzugt werden Alkali-, Erdalkalimetallsalze, Salze mit Ammonium Ion als Kation, sowie Metallsalze der 12. oder 13. Gruppe des Periodensystems der Hypophosphorsäure eingesetzt. Insbesondere bevorzugt werden Alkalimetallsalze der Hypophosphorsäure eingesetzt, wobei es sich auch um Hydrate der Salze handeln kann.

Ganz besonders bevorzugt wird als Komponente c) Natriumhypophosphit [CAS No. 7681-53-0] oder Natriumhypophosphit Monohydrat [CAS No. 10039-56-2] eingesetzt. Natriumhypophosphit und Natriumhypophosphit Monohydrat sind kommerziell unter anderem bei der Firma Sigma Aldrich zu erwerben.

**Komponente d)**

Als Komponente d) wird erfindungsgemäß das organische Phosphit Bis(2,4-di-t-butylphenyl)pentaerythritoldiphosphit (Antioxidant 626) mit der CAS No. 26741-53-7 der Formel (III) eingesetzt.

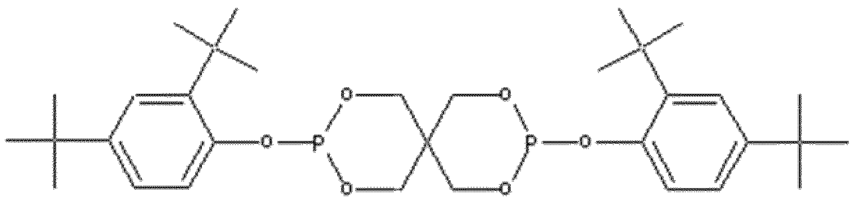

(III)

Kommerziell erhältlich ist Komponente d) unter anderem bei der Firma Brenntag unter dem Handelsnamen Ultranox™ 626.

**Komponente e)**

Als Komponente e) werden Glasfasern eingesetzt. Bezüglich Glasfasern unterscheidet der Fachmann gemäß **"http://de.wikipedia.org/wiki/Faser-Kunststoff-Verbund"** geschnittene Fasern, auch als Kurzfasern bezeichnet, mit einer Länge im Bereich von 0,1 bis 1 mm, Langfasern mit einer Länge im Bereich von 1 bis 50 mm und Endlosfasern mit einer Länge L > 50 mm. Alle Längenangaben beziehen sich auf den Zustand vor einer Verarbeitung zu erfindungsgemäßen Zusammensetzungen, Formmassen oder Erzeugnissen. Kurzfasern werden vorzugsweise in der Spritzgusstechnik eingesetzt und können direkt mit einem Extruder verarbeitet werden. Langfasern können ebenfalls noch in Extrudern verarbeitet werden. Sie finden im großen Umfang Einsatz beim Faserspritzen. Langfasern werden häufig Duroplasten als Füllstoff zugemischt. Endlosfasern werden als Rovings oder Gewebe in faserverstärkten Kunststoffen eingesetzt. Erzeugnisse mit Endlosfasern erzielen die höchsten Steifigkeits- und Festigkeitswerte. Des Weiteren werden gemahlene Glasfasern angeboten, deren Länge nach der Vermahlung typischerweise im Bereich von 70 bis 200 μm liegt.

Erfindungsgemäß bevorzugt als Komponente e) einzusetzende Glasfasern sind geschnittene Langglasfasern mit einer mittels Laserdiffraktometrie gemäß **ISO 13320** zu bestimmenden mittleren Ausgangslänge im Bereich von 1 bis 50 mm, besonders bevorzugt im Bereich von 1 bis 10 mm, ganz besonders bevorzugt im Bereich von 2 bis 7 mm. Der Begriff Ausgangslänge bezieht sich auf den Zustand vor jeglicher Einarbeitung der Glasfasern in die Komponenten a), b), c) oder d).

Zu Laserbeugungs-Partikelgrößenbestimmung/Laserdiffraktometrie gemäß der Norm **ISO 13320** siehe: **https://de.wikipedia.org/wiki/Laserbeugungs-Partikelgr%C3%B6%C3%9Fenanalyse**

Bevorzugte, als Komponente e) einzusetzende Glasfasern haben einen mittels Laserdiffraktometrie gemäß **ISO 13320** zu bestimmenden mittleren Faserdurchmesser im Bereich von 7 bis 18 μm, besonders bevorzugt im Bereich von 9 bis 15 μm.

Die als Komponente e) einzusetzenden Glasfasern werden in einer bevorzugten Ausführungsform mit einem geeigneten Schlichtesystem oder einem Haftvermittler bzw. Haftvermittlersystem ausgerüstet. Bevorzugt wird ein Schlichtesystem bzw. ein Haftvermittler auf Silanbasis eingesetzt. Besonders bevorzugte Haftvermittler auf Silanbasis für die Behandlung der Komponente e), insbesondere für die Behandlung von Glasfasern, sind Silanverbindungen der allgemeinen Formel (IV)

$$(X\text{-}(CH_2)_q)_k\text{-}Si\text{-}(O\text{-}C_rH_{2r+1})_{4-k} \qquad \text{(IV)}$$

worin

X für $NH_2$-, Carboxyl-, HO- oder steht,

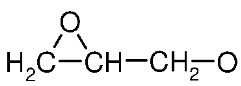

q in Formel (IV) für eine ganze Zahl von 2 bis 10, bevorzugt 3 bis 4 steht,

r in Formel (IV) für eine ganze Zahl von 1 bis 5, bevorzugt 1 bis 2 steht und

k in Formel (IV) für eine ganze Zahl von 1 bis 3, bevorzugt 1 steht.

Insbesondere bevorzugte Haftvermittler sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent X eine Glycidyl- oder eine Carboxylgruppe enthalten, wobei Carboxylgruppen insbesondere ganz besonders bevorzugt sind.

Für die Ausrüstung der als Komponente e) einzusetzenden Glasfasern wird der Haftvermittler, bevorzugt die Silanverbindungen gemäß Formel (IV), bevorzugt in Mengen im Bereich von 0,05 bis 2 Gew.-%, besonders bevorzugt in Mengen im Bereich von 0,25 bis 1,5 Gew.-% und ganz besonders bevorzugt in Mengen im Bereich von 0,5 bis 1 Gew.-%, jeweils bezogen auf 100 Gew.-% Komponente e), eingesetzt.

Die als Komponente e) eingesetzten Glasfasern können bedingt durch die Verarbeitung zur Zusammensetzung bzw. zum Erzeugnis in der Zusammensetzung bzw. im Erzeugnis kürzer sein, als die ursprünglich eingesetzten Glasfasern. So liegt der mittels hochauflösender Röntgencomputertomographie zu bestimmende arithmetische Mittelwert der Glasfaserlänge nach der Verarbeitung bzw. im Polyamid basierten Erzeugnis häufig nur noch im Bereich von 150 μm bis 300 μm.

Gemäß **"http://www.r-g.de/wiki/Glasfasern"** werden Glasfasern im Schmelzspinnverfahren (Düsenzieh-, Stabzieh- und Düsenblasverfahren) hergestellt. Beim Düsenziehverfahren fließt unter Ausnutzung der Schwerkraft die heiße Glasmasse durch hunderte Düsenbohrungen einer Platinspinnplatte. Die Elementarfäden können in unbegrenzter Länge mit einer Geschwindigkeit von 3 - 4 km/Minute gezogen werden.

Der Fachmann unterscheidet verschiedene Glasfasersorten, wovon hier beispielsweise einige gelistet sind:

- E-Glas, das meistverwendete Material mit optimalem Preis-Leistungsverhältnis (E-Glas von R&G)
- H-Glas, Hohlglasfasern für reduziertes Gewicht (R&G Glashohlfasergewebe 160 g/$m^2$ und 216 g/$m^2$)
- R, S-Glas, für erhöhte mechanische Anforderungen (S2-Glas von R&G)
- D-Glas, Borsilicatglas für erhöhte elektrische Anforderungen
- C-Glas, mit erhöhter chemischer Widerstandsfähigkeit
- Quarzglas, mit hoher Temperaturbeständigkeit

Weitere Beispiele finden sich unter **"http://de.wikipedia.org/wiki/Glasfaser".** Für die Kunststoffverstärkung haben E-Glasfasern die größte Bedeutung erlangt. E steht für Elektro-Glas, da es ursprünglich vor allem in der Elektroindustrie eingesetzt wurde. Für die Produktion von E-Glas werden Glasschmelzen aus reinem Quarz mit Zusätzen aus Kalkstein, Kaolin und Borsäure hergestellt. Sie enthalten neben Siliziumdioxid unterschiedliche Mengen verschiedener Metalloxide. Die Zusammensetzung bestimmt die Eigenschaften der Produkte. Erfindungsgemäß bevorzugt wird wenigstens eine Sorte Glasfasern aus der Gruppe E-Glas, H-Glas, R,S-Glas, D-Glas, C-Glas und Quarzglas eingesetzt, besonders bevorzugt Glasfasern aus E-Glas.

Glasfasern aus E-Glas sind der am weitesten verbreitete Verstärkungswerkstoff. Die Festigkeitseigenschaften entsprechen denen von Metallen (z. B. Alu-Legierungen), wobei das spezifische Gewicht von E-Glasfasern enthaltenden Laminaten niedriger ist, als das der Metalle. E-Glasfasern sind unbrennbar, hitzefest bis ca. 400°C und beständig gegen die meisten Chemikalien und Witterungseinflüsse.

**Komponente f)**

In bevorzugter Ausführungsform wird als Komponente f) wenigstens ein Flammschutzmittel eingesetzt. Bevorzugte **Flammschutzmittel** sind verschiedene mineralische Flammschutzmittel, stickstoffhaltige Flammschutzmittel oder phosphorhaltige Flammschutzmittel.

Unter den als Komponente f) einzusetzenden mineralischen Flammschutzmitteln ist Magnesiumhydroxid besonders bevorzugt. Magnesiumhydroxid [CAS No. 1309-42-8] kann aufgrund seiner Herkunft und Herstellungsweise verunreinigt sein. Typische Verunreinigungen sind z. B. Silicium-, Eisen-, Calcium- und/oder Aluminium-haltige Spezies, die beispielsweise in Form von Oxiden in den Magnesiumhydroxid-Kristallen eingelagert sein können. Das als mineralisches Flammschutzmittel einzusetzende Magnesiumhydroxid kann unbeschlichtet oder aber mit einer Schlichte versehen sein. Eine Schlichte fördert qualitätsbeeinflussend den mechanischen Verbund zwischen Kunststoff(matrix) und der mit Schlichte zu versehenden Komponente. Vorzugsweise wird das als mineralisches Flammschutzmittel vorzugsweise einzusetzende Magnesiumhydroxid mit Schlichten auf Basis von Stearaten oder Aminosiloxanen, besonders

bevorzugt mit Aminosiloxanen versehen. Vorzugsweise als mineralisches Flammschutzmittel einzusetzendes Magnesiumhydroxid hat eine mittels Laserdiffraktometrie gemäß **ISO 13320** zu bestimmende mittlere Teilchengröße d50 im Bereich von 0,5 μm bis 6 μm, wobei ein d50 im Bereich von 0,7 μm bis 3,8 μm bevorzugt und ein d50 im Bereich von 1,0 μm bis 2,6 μm besonders bevorzugt ist.

Erfindungsgemäß bevorzugte mineralische Flammschutzmittel sind Magnesiumhydroxidtypen, insbesondere Magnifin® H5IV der Martinswerk GmbH, Bergheim, Deutschland oder Hidromag® Q2015 TC der Firma Penoles, Mexiko-Stadt, Mexico.

Bevorzugte, als Komponente e) einzusetzende stickstoffhaltige Flammschutzmittel sind die Reaktionsprodukte aus Trichlortriazin, Piperazin und Morpholin gemäß CAS No. 1078142-02-5, insbesondere MCA PPM Triazin HF der Fa. MCA Technologies GmbH, Biel-Benken, Schweiz, ferner Melamincyanurat und Kondensationsprodukte des Melamins, insbesondere Melem, Melam, Melon bzw. höherkondensierte Verbindungen dieses Typs. Bevorzugte anorganische stickstoffhaltige Verbindungen sind Ammoniumsalze.

Ferner können auch Salze aliphatischer und aromatischer Sulfonsäuren und mineralische Flammschutzadditive, insbesondere Aluminiumhydroxid oder Ca-Mg-Carbonat-Hydrate **(**DE-A 4 236 122**)** eingesetzt werden.

In Frage kommen für den Einsatz als Komponente f) ferner Flammschutzmittelsynergisten aus der Gruppe der sauerstoff- stickstoff- oder schwefelhaltigen Metallverbindungen. Bevorzugt sind dabei zinkfreie Verbindungen, insbesondere Molybdänoxid, Magnesiumoxid, Magnesiumcarbonat, Calciumcarbonat, Calciumoxid, Titannitrid, Magnesiumnitrid, Calciumphosphat, Calciumborat, Magnesiumborat oder deren Mischungen.

In einer alternativen Ausführungsform können als Komponente f) aber auch - sofern es der Bedarf erfordert - zinkhaltige Verbindungen eingesetzt werden. Hierzu zählen bevorzugt Zinkoxid, Zinkborat, Zinkstannat, Zinkhydroxystannat, Zinksulfid und Zinknitrid, oder deren Mischungen.

Bevorzugte, als Komponente f) einzusetzende phosphorhaltige Flammschutzmittel sind organische Metallphosphinate, Aluminiumsalze der Phosphonsäure, roter Phosphor, anorganische Metallhypophosphite, Metallphosphonate, Derivate der 9,10-Dihydro-9-oxa-10-phosphaphenanthren-10-oxide (DOPO-Derivate), Resorcinol-bis-(diphenylphosphat) (RDP) einschließlich Oligomere, Bisphenol-A-bis-diphenylphosphat (BDP) einschließlich Oligomere, Melaminpyrophosphat, Melaminpolyphosphat, Melamin-poly(aluminiumphosphat), Melamin-poly(zinkphosphat) oder Phenoxyphosphazenoligomere und deren Mischungen.

Ein bevorzugtes organisches Metallphosphinat ist Aluminium-tris(diethylphosphinat). Ein bevorzugtes anorganisches Metallhypophosphit ist Aluminiumhypophosphit.

Weitere als Komponente f) einzusetzende Flammschutzmittel sind Kohlebildner, besonders bevorzugt Phenol-Formaldehydharze, Polycarbonate, Polyimide, Polysulfone, Polyethersulfone oder Polyetherketone sowie Antitropfmittel, insbesondere Tetrafluorethylenpolymerisate.

Die als Komponente f) einzusetzenden Flammschutzmittel können in Reinform, sowie über Masterbatche oder Kompaktate der Komponente a) zugesetzt werden.

In einer alternativen Ausführungsform können als Komponente f) Flammschutzmittel aber auch - sofern der Bedarf es erfordert unter Berücksichtigung der Nachteile durch den Verlust der Halogenfreiheit der Flammschutzmittel - halogenhaltige Flammschutzmittel eingesetzt werden. Bevorzugte halogenhaltige Flammschutzmittel sind handelsübliche organische Halogenverbindungen, besonders bevorzugt Ethylen-1,2-bistetrabrom-phthalimid, Decabromdiphenylethan, Tetrabrombisphenol-A-epoxyoligomer, Tetrabrombisphenol-A-oligocarbonat, Tetrachlorbisphenol-A-oligocarbonat, Polypenta-brombenzylacrylat, bromiertes Polystyrol oder bromierte Polyphenylenether, die alleine oder in Kombination mit Synergisten eingesetzt werden können, wobei unter den halogenhaltigen Flammschutzmitteln bromiertes Polystyrol besonders bevorzugt ist. Bromiertes Polystyrol wird dabei bevorzugt zu 10 - 30 Gew.-%, besonders bevorzugt zu 15 - 25 Gew.% eingesetzt, jeweils bezogen auf die Gesamtzusammensetzung, wobei wenigstens eine der übrigen Komponenten soweit reduziert wird, dass die Summe aller Gewichtsprozente stets 100 ergibt.

In einer weiteren alternativen Ausführungsform können als Flammschutzmittelsynergisten aber auch - sofern der Bedarf es erfordert und unter Berücksichtigung der anfangs beschriebenen Nachteile hinsichtlich der Gefahrenklassifizierung H351 - auch Antimontrioxid und Antimonpentoxid eingesetzt werden.

Bromiertes Polystyrol ist in diversen Produktqualitäten kommerziell verfügbar. Beispiele hierfür sind z. B. Firemaster® PBS64 der Fa. Lanxess, Köln, Deutschland sowie Saytex® HP-3010 der Fa. Albemarle, Baton Rouge, USA.

Unter den als Komponente f) einzusetzenden Flammschutzmitteln sind Aluminium-tris(diethylphosphinat)] [CAS No. 225789-38-8] sowie die Kombination aus Aluminium-tris(diethylphosphinat) und Melaminpolyphosphat oder die Kombination aus Aluminium-tris(diethylphosphinat) und mindestens einem Aluminiumsalz der Phosphonsäure ganz besonders bevorzugt, wobei letztere Kombination insbesondere bevorzugt ist.

Im Falle der Kombinationen aus Aluminium-tris(diethylphosphinat) und Melaminpolyphosphat bzw. aus Aluminium-tris(diethylphosphinat) und mindestens einem Aluminiumsalz der Phosphonsäure liegt der Anteil an Aluminium-tris(diethylphosphinat) bevorzugt im Bereich von 40 bis 90 Gewichtsteilen, besonders bevorzugt im Bereich von 50 bis 80 Gewichtsteilen, ganz besonders bevorzugt im Bereich von 60 bis 70 Gewichtsteilen, jeweils bezogen auf 100 Gewichtsteile der Kombination aus Aluminium-tris(diethylphosphinat) und Melaminpolyphosphat bzw. der Kombination aus

Aluminium-tris(diethylphosphinat) und mindestens einem Aluminiumsalz der Phosphonsäure.

Das als Komponente f) insbesondere bevorzugt einzusetzende Aluminium-tris(diethylphosphinat) ist dem Fachmann als Exolit® OP1230 oder Exolit® OP1240 der Fa. Clariant International Ltd. Muttenz, Schweiz, bekannt. Melaminpolyphosphat ist in diversen Produktqualitäten kommerziell verfügbar. Beispiele hierfür sind z. B. Melapur® 200/70 der Fa. BASF, Ludwigshafen, Deutschland sowie Budit® 3141 der Fa. Budenheim, Budenheim, Deutschland.

Bevorzugte, als Komponente f) einzusetzende Aluminiumsalze der Phosphonsäure sind ausgewählten aus der Gruppe

primäres Aluminiumphosphonat $[Al(H_2PO_3)_3]$,

basisches Aluminiumphosphonat $[Al(OH)H_2PO_3)_2 \cdot 2H_2O]$,

$Al_2(HPO_3)_3 \cdot x\ Al_2O_3 \cdot nH_2O$ mit x im Bereich von 2,27 bis 1 und n im Bereich von 0 bis 4,

$Al_2(HPO_3)_3 \cdot (H_2O)_q$ der allgemeinen Formel (IV) mit q im Bereich von 0 bis 4, insbesondere Aluminiumphosphonattetrahydrat $[Al_2(HPO_3)_3 \cdot 4H_2O]$ oder sekundäres Aluminiumphosphonat $[Al_2(HPO_3)_3$

$Al_2M_z(HPO_3)_y(OH)_v \cdot (H_2O)_w$ der allgemeinen Formel (V) worin M Alkalimetallion(en) bedeutet und z im Bereich von 0,01 bis 1,5, y im Bereich von 2,63 - 3,5, v im Bereich von 0 bis 2 und w im Bereich von 0 bis 4 liegt, und

$Al_2(HPO_3)_u(H_2PO_3)_t - (H_2O)_s$ der allgemeinen Formel (VI), worin u im Bereich von 2 bis 2,99, t im Bereich von 2 bis 0,01 und s im Bereich von 0 bis 4 liegt,

wobei in Formel (V) z, y und v sowie in Formel (VI) u und t nur solche Zahlen annehmen können, dass das entsprechende Aluminiumsalz der Phosphonsäure als Ganzes ungeladen ist.

Bevorzugte Alkalimetalle M in Formel (V) sind Natrium und Kalium.

Die beschriebenen Aluminiumsalze der Phosphonsäure können dabei einzeln oder im Gemisch eingesetzt werden.

Besonders bevorzugte als Komponente f) einzusetzende Aluminiumsalze der Phosphonsäure werden ausgewählt aus der Gruppe

primäres Aluminiumphosphonat $[Al(H_2PO_3)_3]$,

sekundäres Aluminiumphosphonat $[Al_2(HPO_3)_3]$,

basisches Aluminiumphosphonat $[Al(OH)H_2PO_3)_2 \cdot 2H_2O]$,

Aluminiumphosphonattetrahydrat $[Al_2(HPO_3)_3 \cdot 4H_2O]$ und

$Al_2(HPO_3)_3 \cdot x\ Al_2O_3 \cdot n\ H_2O$ mit x im Bereich von 2,27 bis 1 und n im Bereich von 0 bis 4.

Ganz besonders bevorzugt sind sekundäres Aluminiumphosphonat $Al_2(HPO_3)_3$ [CAS No. 71449-76-8] und sekundäres Aluminiumphosphonattetrahydrat $Al_2(HPO_3)_3 \cdot 4H_2O$ [CAS No. 156024-71-4], insbesondere bevorzugt ist sekundäres Aluminiumphosphonat $Al_2(HPO_3)_3$.

Die Herstellung erfindungsgemäß als Komponente f) einzusetzender Aluminiumsalze der Phosphonsäure ist zum Beispiel in WO 2013/083247 A1 beschrieben. Sie erfolgt üblicherweise durch Umsetzung einer Aluminiumquelle, bevorzugt Aluminiumisopropoxid, Aluminiumnitrat, Aluminiumchlorid oder Aluminiumhydroxid, mit einer Phosphorquelle, bevorzugt Phosphonsäure, Ammoniumphosphonat, Alkaliphosphonat, und wahlweise mit einem Templat in einem Lösungsmittel bei 20 bis 200°C während einer Zeitspanne von bis zu 4 Tagen. Aluminiumquelle und Phosphorquelle werden dazu vermischt, unter hydrothermalen Bedingungen oder unter Rückfluss erhitzt, abfiltriert gewaschen und getrocknet. Bevorzugte Template dabei sind 1,6 Hexandiamin, Guanidincarbonat oder Ammoniak. Bevorzugtes Lösungsmittel ist Wasser.

Insbesondere ganz besonders bevorzugt wird Aluminium-tris(diethylphosphinat) als Komponente f) eingesetzt. Erfindungsgemäß insbesondere bevorzugt sind deshalb Zusammensetzungen sowie verstärkte Polyamid basierte Erzeugnisse enthaltend zusätzlich zu den Komponenten a), b), c), d) und e) noch wenigstens 3 bis 100 Massenanteile, bevorzugt zu 5 bis 80 Massenanteile, besonders bevorzugt zu 10 bis 50 Massenanteile, jeweils bezogen auf 100 Massenanteile der Komponente a), Aluminium-tris(diethylphosphinat).

**Komponente g)**

Als Komponente g) wird wenigstens ein weiteres, von den Komponenten b), c), d), e) und f) verschiedenes **Additiv** eingesetzt. Bevorzugte als Komponente g) einzusetzende Additive sind Antioxidantien, Thermostabilisatoren, UV-Stabilisatoren, Gammastrahlenstabilisatoren, Komponenten zur Verringerung der Wasseraufnahme bzw. Hydrolysestabilisatoren, Antistatika, Emulgatoren, Nukleierungsmittel, Weichmacher, Verarbeitungshilfsmittel, Gleit- und/oder Entformungsmittel, Komponenten zur Verringerung der Wasseraufnahme, Fließhilfsmittel, kettenverlängernd wirkende Additive, Farbmittel, Farbstoffe, Pigmente oder Laserabsorber. Die Additive können alleine oder in Mischung bzw. in Form von Masterbatchen eingesetzt werden.

Bevorzugte **Thermostabilisatoren** der Komponente g) sind sterisch gehinderte Phenole, insbesondere solche enthaltend mindestens eine 2,6-Di-tert.-butylphenyl-Gruppe und/oder 2-tert.-Butyl-6-methylphenyl-Gruppe, Phosphite, Hydrochinone, substituierte Resorcine, Salicylate, Benzotriazole und Benzophenone, sowie verschieden substituierte Vertreter dieser Gruppen oder deren Mischungen.

In einer Ausführungsform können als Thermostabilisatoren auch Kupfersalze eingesetzt werden. Bevorzugt wird als Kupfersalz Kupfer(I)iodid [CAS Nr. 7681-65-4] und/oder Kupfer(triphenylphosphino)iodid [CAS No. 47107-74-4] eingesetzt.

Als Komponente g) einzusetzende **UV-Stabilisatoren** werden vorzugsweise substituierte Resorcine, Salicylate, Benzotriazole und Benzophenone, HALS-Derivate ("Hindered Amine Light Stabilizers") enthaltend mindestens eine 2,2,6,6-Tetramethyl-4-piperidyl-Einheit oder Benzophenone eingesetzt. Als Komponente g) einzusetzende UV-Stabilisatoren werden vorzugsweise zu 0,01 bis 2 Massenanteilen, besonders bevorzugt zu 0,1 bis 1 Massenanteilen, jeweils bezogen auf 100 Massenanteile der Komponente a) eingesetzt.

Als Komponente g) einzusetzende **Farbmittel** werden in einer Ausführungsform bevorzugt anorganische Pigmente eingesetzt, besonders bevorzugt Ultramarinblau, Bismutvanadat [CAS No. 14059-33-7], Eisenoxid [CAS No. 1309-37-1], Titandioxid [CAS No. 13463-67-7 (Rutil) oder CAS No. 1317-70-0 (Anatas)], Bariumsulfat [CAS No. 7727-43-7], Zinksulfid [CAS No. 1314-98-3] oder Sulfide enthaltend Cer. Bevorzugte Sulfide enthaltend Cer sind Cer(III) sulfid ($Ce_2S_3$) [CAS-No. 12014-93-6], auch bekannt als C.I.Pigment Orange 75, oder Cer(III)sulfid / Lanthan(III)sulfid ($Ce_2S_3$ / $La_2S_3$) [CAS-No. 12014-93-6 ; CAS-No. 12031-49-1] auch bekannt als C.I. Pigment Orange 78. Insbesondere bevorzugt ist Bariumsulfat. Insbesondere bevorzugt ist auch Titandioxid, auch als Pigment White 6 oder CI 77891 bezeichnet.

Erfindungsgemäß ebenfalls als Komponente g) einzusetzende **Farbmittel** sind vorzugsweise auch Pigmentsysteme auf Basis anorganischer Mischoxide enthaltend Titandioxid, Zinnoxid und Zinkoxid. Ein als Komponente g) erfindungsgemäß bevorzugt einzusetzendes Pigmentsystem auf Basis anorganischer Mischoxide enthaltend Titandioxid, Zinnoxid und Zinkoxid ist aus EP 0 113 229 B1 bekannt, ebenso dessen Herstellung. Der Inhalt der EP 0 113 229 B1 wird von der vorliegenden Beschreibung vollumfänglich umfasst. Gemäß EP 0 113 229 B1 werden die Mengenverhältnisse der Zinn-, Titan-, Zink- und Sauerstoffanteile in einem erfindungsgemäß als Komponente g) einzusetzenden Pigmentsystem vorzugsweise durch die allgemeine Formel (VII) wiedergegeben

$$(TiO_2)_cSnO(ZnO)_d(SnO)_e, \qquad (VII)$$

worin c im Bereich von 0,3 bis 6,2 liegt, d im Bereich von 0,04 bis 6,2 liegt und e im Bereich von 0 bis 7 liegt.

Vorzugsweise enthält ein als Komponente g) einzusetzendes Pigmentsystem der allgemeinen Formel (VII) 300 bis 6000 Atomteile Alkalimetallreste pro Million Atomteile des gesamten Komplexes bzw. Pigmentsystems. Ein als Komponente g) einzusetzendes Pigmentsystem auf Basis anorganischer Mischoxide aus Titandioxid, Zinnoxid und Zinkoxid kann erfindungsgemäß einzeln oder im Gemisch mit wenigstens einem weiteren anorganischen Mischoxid aus Titandioxid, Zinnoxid und Zinkoxideingesetzt werden.

Insbesondere bevorzugt ist ein Pigmentsystem der allgemeinen Formel (VII) der CAS-Nr. 923954-49-8, oder C.I. Pigment Orange 82 [CAS-Nr. 2170864-77-2] oder C.I.Pigment Yellow 216 [CAS-Nr. 817181-98-9] einzusetzen. Bezüglich der C.I. Klassifizierung siehe: **https://de.wikipedia.org/wiki/Colour_Index.** Pigment Orange 82 kann beispielsweise unter dem Namen Sicopal® Orange K2430 bei der Firma BASF SE, Ludwigshafen, Deutschland bezogen werden. Pigment Yellow 216 kann beispielsweise unter dem Namen Orange 10P340 bei der Firma Shepherd, Gent, Belgien bezogen werden.

Als Komponente g) einzusetzende weitere **Farbmittel** werden in einer Ausführungsform bevorzugt organische Farbmittel eingesetzt, besonders bevorzugt Phthalocyanine, Chinacridone, Benzimidazole, insbesondere Ni-2-hydroxynapthyl-benzimidazol [CAS Nr. 42844-93-9] und/oder Pyrimidin-azo-benzimidazol [CAS-Nr. 72102-84-2] und/oder Pigment Yellow 192 [CAS Nr. 56279-27-7], außerdem Perylene, Anthrachinone, insbesondere C.I. Solvent Yellow 163 [CAS Nr. 13676-91-0] und Phthaloperine, insbesondere 10,10'-Oxy-bis-12H-phthaloperin-12-on [CAS Nr. 203576-97-0] und 12H-Phthaloperin-12-on [CAS Nr. 6925-69-5], wobei 10,10'-Oxy-bis-12H-phthaloperin-12-on insbesondere bevorzugt ist.

In einer alternativen Ausführungsform können - sofern es der Bedarf erfordert - auch Ruß oder Nigrosin als Farbmittel der Komponente g) eingesetzt werden.

In einer besonders bevorzugten Ausführungsform werden die Farbmittel erfindungsgemäß so eingesetzt, dass die farbstabilen, schlagzähen Polyamid basierten Erzeugnisse "orange" eingefärbt sind, wobei Farbtöne, die im RAL-Farbsystem "ähnlich" zu denen der Farbnummern RAL2001, RAL2003, RAL2004, RAL2007, RAL2008, RAL2009, RAL2010 und RAL2011 sind, bevorzugt sind und solche Farbtöne die "ähnlich" zu den Farbnummern RAL2003, RAL2008 und RAL2011 sind, ganz besonders bevorzugt sind. Unter "orange" wird erfindungsgemäß ein Farbton verstanden, der "ähnlich" zu einem Farbton einer mit "2" beginnenden Farbnummer der RAL-Farbtabelle ist. "Ähnliche" Farbtöne sind dabei erfindungsgemäß solche, deren Farbabstand im L*a*b*-System einen $\Delta E$ von <20, bevorzugt ein $\Delta E$ <10, besonders bevorzugt $\Delta E$ <5 zu der Farbe der RAL-Farbtabelle aufweisen. Zur Erläuterung des in **EN ISO 11664-4** definierten $\Delta E$ siehe beispielsweise: **https://de.wikipedia.org/wiki/Delta_E.**

Als Komponente g) einzusetzende **Nukleierungsmittel** sind vorzugsweise Natrium- oder Calciumphenylphosphinat, Aluminiumoxid, Siliziumdioxid oder Talkum. Besonders bevorzugt wird als Nukleierungsmittel Talkum [CAS-Nr.14807-96-6] eingesetzt, insbesondere mikrokristallines Talkum. Talkum, auch als Talk bezeichnet, ist ein Schichtsilikat mit der chemischen Zusammensetzung $Mg_3[Si_4O_{10}(OH)_2]$, das je nach Modifikation als Talk-1A im triklinen oder als Talk-2M im monoklinen Kristallsystem kristallisiert **(http://de.wikipedia.org/wiki/Talkum).** Erfindungsgemäß einzusetzendes Talkum kann beispielsweise als Mistron® R10 von Imerys Talc Group, Toulouse, Frankreich (Rio Tinto Group) bezogen werden.

Als Komponente g) einzusetzende **Fließhilfsmittel** werden bevorzugt Copolymerisate aus mindestens einem $\alpha$-Olefin mit mindestens einem Methacrylsäurester oder Acrylsäureester eines aliphatischen Alkohols eingesetzt. Besonders bevorzugt sind dabei Copolymerisate, bei denen das $\alpha$-Olefin aus Ethen und/oder Propen aufgebaut ist und der Methacrylsäurester oder Acrylsäureester als Alkoholkomponente lineare oder verzweigte Alkylgruppen mit 6 bis 20C-Atomen enthält. Ganz besonders bevorzugt ist Acrylsäure-(2-ethyl)-hexylester. Als Fließhilfsmittel geeignete Copolymerisate zeichnen sich neben der Zusammensetzung auch durch das niedrige Molekulargewicht aus. Dementsprechend sind für die erfindungsgemäßen Polymerzusammensetzungen vor allem Copolymerisate geeignet, die einen MFI-Wert gemessen bei 190°C und einer Belastung von 2,16 kg von mindestens 100 g / 10 min, bevorzugt von mindestens 150 g / 10 min, besonders bevorzugt von mindestens 300 g / 10 min aufweisen. Der MFI, Melt-Flow-Index, dient zur Charakterisierung des Flusses einer Schmelze eines Thermoplasten und unterliegt den Normen **ISO 1133** oder **ASTM D 1238.** Insbesondere bevorzugt wird als Fließhilfsmittel ein Copolymerisat aus Ethen und Acrylsäure-(2-ethyl)-hexylester mit MFI 550 eingesetzt, bekannt als Lotryl® 37EH550.

Als Komponente g) einzusetzende **kettenverlängernde Additive** werden bevorzugt di- oder mehrfunktionelle verzweigend oder kettenverlängernd wirkende Additive, enthaltend mindestens zwei verzweigend oder kettenverlängernd wirkende funktionelle Gruppen pro Molekül, eingesetzt. Als verzweigende bzw. kettenverlängende Additive werden niedermolekulare oder oligomere Verbindungen bevorzugt, die über mindestens zwei kettenverlängernd wirkende funktionelle Gruppen pro Molekül verfügen, welche mit primären und/oder sekundären Aminogruppen, und/oder Amidgruppen und/oder Carbonsäuregruppen reagieren können. Kettenverlängernd wirkende funktionelle Gruppen sind bevorzugt Isocyanate, Alkohole, blockierte Isocyanate, Epoxide, Maleinsäureanhydrid, Oxazoline, Oxazine, Oxazolone, wobei Epoxide bevorzugt sind.

Insbesondere bevorzugte di- oder mehrfunktionelle verzweigend oder kettenverlängernd wirkende Additive sind Diepoxide auf Basis Diglycidylether (Bisphenol und Epichlorhydrin), auf Basis von Aminepoxidharz (Anilin und Epichlorhydrin), auf Basis von Diglycidylester (cycloaliphatische Dicarbonsäuren und Epichlorhydrin) einzeln oder in Mischungen sowie 2,2-Bis[p-hydroxy-phenyl]-propan-diglycidylether, Bis-[p-(N-methyl-N-2,3-epoxy-propyl- amino)-phenyl]-methan sowie epoxidierte Fettsäureester des Glycerins, enthaltend mindestens zwei Epoxidgruppen pro Molekül.

Besonders bevorzugte di- oder mehrfunktionelle verzweigend oder kettenverlängernd wirkende Additive sind Glycidylether, ganz besonders bevorzugt Bisphenol A-Diglycidylether [CAS No. 98460-24-3] oder epoxidierte Fettsäureester des Glycerins, sowie auch ganz besonders bevorzugt epoxidiertes Sojaöl [CAS No. 8013-07-8] und/oder epoxidiertes Leinöl.

Bevorzugt als Komponente g) einzusetzende **Weichmacher** sind Phthalsäuredioctylester, Phthalsäuredibenzylester, Phthalsäurebutylbenzylester, Kohlenwasserstofföle oder N-(n-Butyl)benzolsulfonamid.

Als Komponente g) einzusetzende **Gleit- und/oder Entformungsmittel** sind bevorzugt langkettige Fettsäuren, insbesondere Stearinsäure oder Behensäure, deren Salze, insbesondere Ca- oder Zn-Stearat, sowie deren Esterderivate, insbesondere solche auf Basis von Pentaerythritol, insbesondere Fettsäureester des Pentaerythritols oder Amidderivate, insbesondere Ethylen-bis-stearylamid, Montanwachse sowie niedermolekulare Polyethylen- bzw. Polypropylenwachse.

Montanwachse im Sinne der vorliegenden Erfindung sind Mischungen aus geradkettigen, gesättigten Carbonsäuren mit Kettenlängen im Bereich von 28 bis 32 C-Atomen.

Erfindungsgemäß werden besonders bevorzugt Gleit- und/oder Entformungsmittel aus der Gruppe der Ester gesättigter oder ungesättigter aliphatischer Carbonsäuren mit 8 bis 40 C-Atomen mit aliphatischen gesättigten Alkoholen

oder Amide von Aminen mit 2 bis 40 C-Atomen mit ungesättigten aliphatischen Carbonsäuren mit 8 bis 40 C-Atomen bzw. statt jeweils der Carbonsäuren Metallsalze gesättigter oder ungesättigter aliphatischer Carbonsäuren mit 8 bis 40 C-Atomen eingesetzt.

Ganz besonders bevorzugt als Komponente g) einzusetzende Gleit- und/oder Entformungsmittel sind auszuwählen aus der Gruppe Pentaerythritoltetrastearat [CAS No. 115-83-3], Ethylen-bis-stearylamid, Calciumstearat, Zinkstearat und Ethylenglycoldimontanat. Insbesondere bevorzugt wird Zinkstearat [CAS No. 557-05-1], Calciumstearat [CAS No. 1592-23-0] oder Ethylen-bis-stearylamid [CAS Nr. 110-30-5] eingesetzt. Insbesondere besonders bevorzugt wird Ethylen-bis-stearylamid (Loxiol® EBS von Emery Oleochemicals) eingesetzt.

Als Komponente f) bevorzugt einzusetzende **Laserabsorber** werden ausgewählt aus der Gruppe Zinnoxid, Zinnorthophosphat, Bariumtitanat, Aluminiumoxid, Kupferhydroxyphosphat, Kupferorthophosphat, Kaliumkupferdiphosphat, Kupferhydroxid, Bismuttrioxid, Zinn- und/oder Antimonoxid dotierte Glimmer und Antrachinon. Besonders bevorzugt ist Zinnoxid.

In einer alternativen Ausführungsform kann als Laserabsorber aber auch - sofern der Bedarf es erfordert unter Berücksichtigung der anfangs beschriebenen Nachteile hinsichtlich der Gefahrenklassifizierung H351 - auch Antimonzinnoxid, Antimontrioxid oder Antimonpentoxid eingesetzt werden.

Der Laserabsorber kann direkt als Pulver oder in Form von Masterbatchen eingesetzt werden. Bevorzugte Masterbatche sind solche auf Basis von Polyamid und/oder Polyolefinen, bevorzugt Polyethylen. Ganz besonders bevorzugt wird der Laserabsorber in Form eines Polyamid 6-basierten Masterbatches eingesetzt.

Der Laserabsorber kann einzeln oder als Gemisch mehrerer Laserabsorber eingesetzt werden. Laserabsorber können Laserlicht einer bestimmten Wellenlänge absorbieren. In der Praxis liegt diese Wellenlänge im Bereich von 157 nm bis 10,6 μm. Beispiele für Laser dieser Wellenlängen sind in WO2009/003976 A1 beschrieben. Bevorzugt werden Nd:YAG Laser, mit denen Wellenlängen von 1064, 532, 355 und 266 nm realisiert werden können, und $CO_2$-Laser eingesetzt.

**Insbesondere bevorzugte Zusammensetzungen / Erzeugnisse**

Die Erfindung betrifft insbesondere Zusammensetzungen sowie Erzeugnisse enthaltend

a) Polyamid 6 oder Polyamid 66,

b) 4,4'Bis(α,α'-dimethylbenzyl)diphenylamin,

c) Natriumhypophosphit oder Natriumhypophosphit Monohydrat,

d) Bis(2,4-di-t-butylphenyl)pentaerythritoldiphosphit, und

e) Glasfasern,

mit der Maßgabe, dass auf 100 Massenanteile der Komponente a)

0,1 bis 3 Massenanteile, bevorzugt 0,3 bis 2 Massenanteile, besonders bevorzugt 0,35 bis 1.5 Massenanteile der Komponente b),

0,01 bis 3 Massenanteile, bevorzugt 0,05 bis 2 Massenanteile, besonders bevorzugt 0,1 bis 1,7 Massenanteile der Komponente c),

0,01 bis 3 Massenanteile, bevorzugt 0,05 bis 1 Massenanteile, der Komponente d), und

5 bis 200 Massenanteile, bevorzugt 15 bis 160 Massenanteile, besonders bevorzugt 30 bis 150 Massenanteile, der Komponente e) eingesetzt werden.

**Bevorzugte Verwendungen**

Die Erfindung betrifft bevorzugt die **Verwendung** von Bis(2,4-di-t-butylphenyl)pentaerythritoldiphosphit zur Herstellung glasfaserverstärkter Polyamid basierter Erzeugnisse mit geringer Farbänderung ΔE berechnet gemäß **DIN EN ISO 11664-4** nach Heißluftlagerung über 500h bei 150°C und/oder geringer Farbänderung ΔE berechnet gemäß **DIN EN ISO 11664-4** nach UV-Lagerung gemäß **DIN ISO 4892-2A** über 200h bei 80°C, 340 nm und 1,55 $W/m^2$ ohne Beregnung und/oder Erhalt der Schlagzähigkeit gemessen nach **ISO180-1U** und/oder der Bruchdehnung gemessen

nach **ISO 527** nach Heißluftalterung über 500h bei 150°C.

Die Erfindung betrifft besonders bevorzugt die **Verwendung** von Bis(2,4-di-t-butylphenyl)pentaerythritoldiphosphit zur Herstellung glasfaserverstärkter Polyamid basierter Erzeugnisse mit geringer Farbänderung ΔE berechnet gemäß **DIN EN ISO 11664-4** nach Heißluftlagerung über 500h bei 150°C und/oder geringer Farbänderung ΔE berechnet gemäß **DIN EN ISO 11664-4** nach UV-Lagerung gemäß **DIN ISO 4892-2A** über 200h bei 80°C, 340 nm und 1,55 $W/m^2$ ohne Beregnung und/oder Erhalt der Schlagzähigkeit gemessen nach **ISO180-1U** und/oder der Bruchdehnung gemessen nach **ISO 527** nach Heißluftalterung über 500h bei 150°C, mit der Maßgabe, dass 0,01 bis 3 Massenanteile, bevorzugt 0,05 bis 1 Massenanteile Bis(2,4-di-t-butylphenyl)pentaerythritoldiphosphit auf 100 Massenanteile Polyamid, insbesondere Polyamid 6 oder Polyamid 66, und 5 bis 200 Massenanteile, bevorzugt 15 bis 160 Massenanteile, besonders bevorzugt 30 bis 150 Massenanteile, Glasfasern eingesetzt werden.

Die Erfindung betrifft bevorzugt die **Verwendung** von Bis(2,4-di-t-butylphenyl)pentaerythritoldiphosphit **in Kombination mit wenigstens einem aromatischen Amin** zur Herstellung glasfaserverstärkter Polyamid basierter Erzeugnisse mit geringer Farbänderung ΔE berechnet gemäß **DIN EN ISO 11664-4** nach Heißluftlagerung über 500h bei 150°C und/oder geringer Farbänderung ΔE berechnet gemäß **DIN EN ISO 11664-4** nach UV-Lagerung gemäß **DIN ISO 4892-2A** über 200h bei 80°C, 340 nm und 1,55 $W/m^2$ ohne Beregnung und/oder Erhalt der Schlagzähigkeit gemessen nach **ISO180-1U** und/oder der Bruchdehnung gemessen nach **ISO 527** nach Heißluftalterung über 500h bei 150°C. Vorzugsweise wird als aromatisches Amin 4,4'Bis(α,α'-dimethylbenzyl)diphenylamin eingesetzt.

Die Erfindung betrifft ganz besonders bevorzugt die **Verwendung** von Bis(2,4-di-t-butylphenyl)pentaerythritoldiphosphit in **Kombination** mit **wenigstens einem aromatischen Amin** zur Herstellung Polyamid basierter Erzeugnisse mit geringer Farbänderung ΔE berechnet gemäß **DIN EN ISO 11664-4** nach Heißluftlagerung über 500h bei 150°C und/oder geringer Farbänderung ΔE berechnet gemäß **DIN EN ISO 11664-4** nach UV-Lagerung gemäß **DIN ISO 4892-2A** über 200h bei 80°C, 340 nm und 1,55 $W/m^2$ ohne Beregnung und/oder Erhalt der Schlagzähigkeit gemessen nach **ISO180-1U** und/oder der Bruchdehnung gemessen nach **ISO 527** nach Heißluftalterung über 500h bei 150°C, mit der Maßgabe, dass 0,01 bis 3 Massenanteile, bevorzugt 0,05 bis 1 Massenanteile Bis(2,4-di-t-butylphenyl)pentaerythritoldiphosphit auf 100 Massenanteile Polyamid, insbesondere Polyamid 6 oder Polyamid 66, und 5 bis 200 Massenanteile, bevorzugt 15 bis 160 Massenanteile, besonders bevorzugt 30 bis 150 Massenanteile, Glasfasern eingesetzt werden. Vorzugsweise wird als aromatisches Amin 4,4'Bis(α,α'-dimethylbenzyl)diphenylamin eingesetzt.

Die Erfindung betrifft bevorzugt die **Verwendung** von Bis(2,4-di-t-butylphenyl)pentaerythritoldiphosphit **in Kombination mit wenigstens einem aromatischen Amin** und **wenigstens einem Phosphinsäurederivat** der allgemeinen Formel (I)

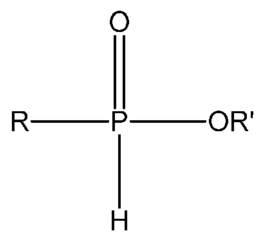

(I)

worin R für ein Wasserstoffatom oder für eine Alkyl-, Cycloalkyl- oder Aryl-Gruppe steht, und R' für ein Alkalimetall, ein Erdalkalimetall, ein Metall der 12. oder 13. Gruppe des Periodensystems der Elemente, ein Ammonium-Ion oder für eine $C_1$-$C_{10}$ Alkylgruppe steht, zur Herstellung glasfaserverstärkter Polyamid basierter Erzeugnisse mit geringer Farbänderung ΔE berechnet gemäß **DIN EN ISO 11664-4** nach Heißluftlagerung über 500h bei 150°C und/oder geringer Farbänderung ΔE berechnet gemäß **DIN EN ISO 11664-4** nach UV-Lagerung gemäß **DIN ISO 4892-2A** über 200h bei 80°C, 340 nm und 1,55 $W/m^2$ ohne Beregnung und/oder Erhalt der Schlagzähigkeit gemessen nach **ISO180-1U** und/oder der Bruchdehnung gemessen nach **ISO 527** nach Heißluftalterung über 500h bei 150°C. Vorzugsweise wird als aromatisches Amin 4,4'Bis(α,α'-dimethylbenzyl)diphenylamin und als Phosphinsäurederivat Natriumhypophosphit oder Natriumhypophosphit Monohydrat eingesetzt.

Die Erfindung betrifft ganz besonders bevorzugt die **Verwendung** von Bis(2,4-di-t-butylphenyl)pentaerythritoldiphosphit in **Kombination mit wenigstens einem aromatischen Amin und wenigstens einem Phosphinsäurederivat** der allgemeinen Formel (I)

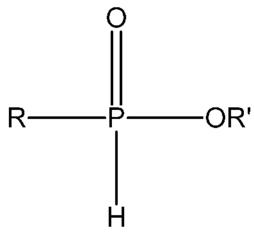

(I)

worin R für ein Wasserstoffatom oder für eine Alkyl-, Cycloalkyl- oder Aryl-Gruppe steht, und R' für ein Alkalimetall, ein Erdalkalimetall, ein Metall der 12. oder 13. Gruppe des Periodensystems der Elemente, ein Ammonium-Ion oder für eine $C_1$-$C_{10}$ Alkylgruppe steht,

zur Herstellung Polyamid basierter Erzeugnisse mit geringer Farbänderung ΔE berechnet gemäß **DIN EN ISO 11664-4** nach Heißluftlagerung über 500h bei 150°C und/oder geringer Farbänderung ΔE berechnet gemäß **DIN EN ISO 11664-4** nach UV-Lagerung gemäß **DIN ISO 4892-2A** über 200h bei 80°C, 340 nm und 1,55 W/m$^2$ ohne Beregnung und/oder Erhalt der Schlagzähigkeit gemessen nach **ISO180-1U** und/oder der Bruchdehnung gemessen nach **ISO 527** nach Heißluftalterung über 500h bei 150°C, mit der Maßgabe, dass 0,01 bis 3 Massenanteile, bevorzugt 0,05 bis 1 Massenanteile Bis(2,4-di-t-butylphenyl)pentaerythritoldiphosphit auf 100 Massenanteile Polyamid, insbesondere Polyamid 6 oder Polyamid 66,

5 bis 200 Massenanteile, bevorzugt 15 bis 160 Massenanteile, besonders bevorzugt 30 bis 150 Massenanteile, Glasfasern,

0,1 bis 3 Massenanteile, bevorzugt 0,3 bis 2 Massenanteile, besonders bevorzugt 0,35 bis 1.5 Massenanteile des aromatischen Amins, insbesondere 4,4'Bis(α,α'-dimethylbenzyl)diphenylamin, und

0,01 bis 3 Massenanteile, bevorzugt 0,05 bis 2 Massenanteile, besonders bevorzugt 0,1 bis 1,7 Massenanteile des Phosphinsäurederivats, insbesondere Natriumhypophosphit oder Natriumhypophosphit Monohydrat, eingesetzt werden.

Die Erfindung betrifft ganz besonders bevorzugt die **Verwendung** von Bis(2,4-di-t-butylphenyl)pentaerythritoldiphosphit in **Kombination mit 4,4'Bis(α,α'-dimethylbenzyl)diphenylamin und Natriumhypophosphit oder Natriumhypophosphit Monohydrat** zur Herstellung glasfaserverstärkter Polyamid basierter Erzeugnisse mit geringer Farbänderung ΔE berechnet gemäß **DIN EN ISO 11664-4** nach Heißluftlagerung über 500h bei 150°C und/oder geringer Farbänderung ΔE berechnet gemäß **DIN EN ISO 11664-4** nach UV-Lagerung gemäß **DIN ISO 4892-2A** über 200h bei 80°C, 340 nm und 1,55 W/m$^2$ ohne Beregnung und/oder Erhalt der Schlagzähigkeit gemessen nach **ISO180-**1U und/oder der Bruchdehnung gemessen nach ISO 527 nach Heißluftalterung über 500h bei 150°C.

Die Erfindung betrifft ganz besonders bevorzugt die **Verwendung** von Bis(2,4-di-t-butylphenyl)pentaerythritoldiphosphit in **Kombination mit 4,4'Bis(α,α'-dimethylbenzyl)diphenylamin und Natriumhypophosphit oder Natriumhypophosphit Monohydrat** zur Herstellung glasfaserverstärkter Polyamid basierter Erzeugnisse mit geringer Farbänderung ΔE berechnet gemäß DIN EN ISO 11664-4 nach Heißluftlagerung über 500h bei 150°C und/oder geringer Farbänderung ΔE berechnet gemäß **DIN EN ISO 11664-4** nach UV-Lagerung gemäß **DIN ISO 4892-2A** über 200h bei 80°C, 340 nm und 1,55 W/m$^2$ ohne Beregnung und/oder Erhalt der Schlagzähigkeit gemessen nach **ISO180-**1U und/oder der Bruchdehnung gemessen nach **ISO 527** nach Heißluftalterung über 500h bei 150°C, mit der Maßgabe, dass 0,01 bis 3 Massenanteile, bevorzugt 0,05 bis 1 Massenanteile Bis(2,4-di-t-butylphenyl)pentaerythritoldiphosphit auf 100 Massenanteile Polyamid 6 oder Polyamid 66,

5 bis 200 Massenanteile, bevorzugt 15 bis 160 Massenanteile, besonders bevorzugt 30 bis 150 Massenanteile, Glasfasern,

0,1 bis 3 Massenanteile, bevorzugt 0,3 bis 2 Massenanteile, besonders bevorzugt 0,35 bis 1,5 Massenanteile des 4,4'Bis(α,α'-dimethylbenzyl)diphenylamin, und

0,01 bis 3 Massenanteile, bevorzugt 0,05 bis 2 Massenanteile, besonders bevorzugt 0,1 bis 1,7 Massenanteile Natriumhypophosphit oder Natriumhypophosphit Monohydrat, eingesetzt werden.

Zur Klarstellung sei angemerkt, dass von den erfindungsgemäßen Verwendungen alle zu den Zusammensetzungen und Polyamid basierten Erzeugnissen aufgeführten, allgemeinen oder in Vorzugsbereichen genannten Definitionen und Parameter in beliebigen Kombinationen mit umfasst sind.

**Insbesondere bevorzugte Verfahren**

Die Erfindung betrifft bevorzugt ein **Verfahren** zur Verringerung der Farbänderung ΔE berechnet gemäß **DIN EN ISO 11664-4** über 500h bei 150°C und/oder zur Verringerung einer Farbänderung ΔE berechnet gemäß **DIN EN ISO 11664-4** nach UV-Bestrahlung gemäß **DIN ISO 4892-2A** über 200h bei 80°C, 340 nm und 1,55 $W/m^2$ ohne Beregnung und/oder zum Erhalt der nach **ISO180-1U** zu bestimmenden Schlagzähigkeit und/oder zum Erhalt der nach **ISO 527** zu bestimmenden Bruchdehnung nach Heißluftalterung über 500h bei 140° in glasfaserverstärkten Polyamid basierten Erzeugnissen, indem man Mischungen enthaltend

b) 0,1 bis 3 Massenanteile, bevorzugt 0,3 bis 2 Massenanteile, besonders bevorzugt 0,35 bis 1.5 Massenanteile wenigstens ein sekundäres aromatisches Amin und

c) 0,01 bis 3 Massenanteile, bevorzugt 0,05 bis 2 Massenanteile, besonders bevorzugt 0,1 bis 1,7 Massenanteile wenigstens ein Phosphinsäurederivat der allgemeinen Formel (I)

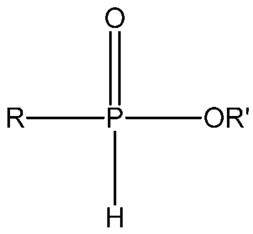
(I)

worin R für ein Wasserstoffatom oder für eine Alkyl-, Cycloalkyl- oder Aryl-Gruppe steht, und R' für ein Alkalimetall, ein Erdalkalimetall, ein Metall der 12. oder 13. Gruppe des Periodensystems der Elemente, ein Ammonium-Ion oder für eine $C_1$-$C_{10}$ Alkylgruppe steht, und

d) 0,01 bis 3 Massenanteile, bevorzugt 0,05 bis 1 Massenanteile Bis(2,4-di-t-butylphenyl)pentaerythritoldiphosphit,

auf 100 Massenanteile Polyamid 6 oder Polyamid 66 und 5 bis 200 Massenanteile, bevorzugt 15 bis 160 Massenanteile, besonders bevorzugt 30 bis 150 Massenanteile Glasfasern einsetzt.

Auch im Falle erfindungsgemäßer Verfahren ist das Ammonium-Ion $NH_4^+$ für R' in Formel (I) ein Kation, das mit Anionen ähnlich wie Alkalimetall-Ionen Salze bildet. Es ist die konjugierte Säure zur Base Ammoniak ($NH_3$).

Wenn R in Formel (I) ein Wasserstoffatom darstellt, handelt es sich um Hypophosphorsäure, wenn R eine Alkyl-, Cycloalkyl- oder Aryl-Gruppe darstellt, handelt es sich um eine Phosphinsäure, wobei die Alkyl-, Cycloalkyl- oder Aryl-Gruppe vorzugsweise bis zu 12 Kohlenstoffatome umfasst.

Wenn R in Formel (I) eine Alkyl-, Cycloalkyl- oder Aryl-Gruppe darstellt, werden bevorzugt Salze und Ester der Phosphinsäure eingesetzt. Bevorzugt werden Salze der Phosphinsäure eingesetzt, wobei es sich auch um Hydrate der Salze handeln kann. Ganz besonders bevorzugt sind Alkali-, Erdalkalimetallsalze sowie Metallsalze der 12. und 13. Gruppe des Periodensystems der Phosphinsäure, wobei es sich auch um Hydrate der Salze handeln kann.

Wenn R in Formel (I) ein Wasserstoffatom ist, handelt es sich um Hypophosphorsäure. Bevorzugt werden Salze und Ester der Hypophosphorsäure eingesetzt. Besonders bevorzugt werden Alkali-, Erdalkalimetallsalze sowie Metallsalze der 12. und 13. Gruppe des Periodensystems der Hypophosphorsäure eingesetzt. Insbesondere bevorzugt werden Alkalimetallsalze der Hypophosphorsäure eingesetzt, wobei es sich auch um Hydrate der Salze handeln kann.

Auch im Falle erfindungsgemäßer Verfahren ist unter einem guten Alterungsverhalten in Form eines verbesserten Farberhalts bzw. einer verbesserten Farbstabilität nach Heißluftalterung zu verstehen, dass der Farbabstand ΔE berechnet gemäß **DIN EN ISO 11664-4** nach Heißluftlagerung über 500 h bei 150°C gering ausfällt, vorzugsweise der Farbabstand ΔE im Bereich von 0 bis 20 liegt, besonders bevorzugt der Farbabstand ΔE im Bereich von 0 bis 15 liegt. Unter einem guten Alterungsverhalten in Form einer verbesserten UV-Stabilität wird im Falle erfindungsgemäßer Verfahren verstanden, dass der Farbabstand ΔE berechnet gemäß **DIN EN ISO 11664-4** nach UV-Lagerung gemäß **DIN ISO 4892-2A** über 200h bei 80°C, 340 nm und 1,55 $W/m^2$ ohne Beregnung gering ausfällt, vorzugsweise der Farbabstand ΔE im Bereich von 0 bis 30 liegt, besonders bevorzugt der Farbabstand ΔE im Bereich von 0 bis 20 liegt.

Unter einem guten Alterungsverhalten in Form eines ausreichenden Erhalts der Schlagzähigkeit nach Heißluftalterung wird im Falle erfindungsgemäßer Verfahren verstanden, dass die Schlagzähigkeit einer Probe gemessen nach **ISO180-1U** nach Heißluftalterung über 500h bei 150°C nicht mehr als 50% im Vergleich zum Zeitpunkt bei 0 h abfällt.

Unter einem guten Alterungsverhalten in Form eines ausreichenden Erhalts der Bruchdehnung nach Heißluftalterung wird im Falle erfindungsgemäßer Verfahren verstanden, dass die Bruchdehnung gemessen nach **DIN EN ISO 527** nach Heißluftalterung über 500h bei 150°C nicht mehr als 30% im Vergleich zum Zeitpunkt bei 0 h abfällt.

Die Erfindung betrifft schließlich insbesondere bevorzugt ein **Verfahren** zur Verringerung der Farbänderung ΔE berechnet gemäß **DIN EN ISO 11664-4** über 500h bei 150°C und/oder zur Verringerung einer Farbänderung ΔE berechnet gemäß **DIN EN ISO 11664-4** nach UV-Bestrahlung gemäß **DIN ISO 4892-2A** über 200h bei 80°C, 340 nm und 1,55 W/m$^2$ ohne Beregnung und/oder zum Erhalt der nach **ISO180-1U** zu bestimmenden Schlagzähigkeit und/oder zum Erhalt der nach **ISO 527** zu bestimmenden Bruchdehnung nach Heißluftalterung über 500h bei 150° in glasfaserverstärkten Polyamid basierten Erzeugnissen, indem man Mischungen enthaltend

b) 0,1 bis 3 Massenanteile, bevorzugt 0,3 bis 2 Massenanteile, besonders bevorzugt 0,35 bis 1.5 Massenanteile **4,4'Bis(α,α'-dimethylbenzyl)diphenylamin,**

c) 0,01 bis 3 Massenanteile, bevorzugt 0,05 bis 2 Massenanteile, besonders bevorzugt 0,1 bis 1,7 Massenanteile **Natriumhypophosphit oder Natriumhypophosphit Monohydrat** und

d) 0,01 bis 3 Massenanteile, bevorzugt 0,05 bis 1 Massenanteile **Bis(2,4-di-t-butylphenyl)pentaerythritoldiphosphit,**

auf 100 Massenanteile Polyamid 6 oder Polyamid 66 und 5 bis 200 Massenanteile, bevorzugt 15 bis 160 Massenanteile, besonders bevorzugt 30 bis 150 Massenanteile Glasfasern einsetzt.

Zur Klarstellung sei angemerkt, dass von den erfindungsgemäßen Verfahren alle zu den Zusammensetzungen und Polyamid basierten Erzeugnissen aufgeführten, allgemeinen oder in Vorzugsbereichen genannten Definitionen und Parameter in beliebigen Kombinationen mit umfasst sind.

Gegenstand der vorliegenden Anmeldung ist auch die Verwendung bzw. Verarbeitung der aus den erfindungsgemäß einzusetzenden Komponenten herzustellenden Formmassen im Extrusionsprozess, in Blasformverfahren oder im Spritzguss zur Herstellung von Erzeugnissen, bevorzugt von Formteilen oder Halbzeugen, insbesondere mittels Spritzguss.

Erfindungsgemäße Verarbeitungsverfahren zur Herstellung von Erzeugnissen mittels Extrusion, Blasformen oder Spritzguss werden bei Schmelzetemperaturen im Bereich von 230 bis 330°C, bevorzugt von 250 bis 300°C sowie gegebenenfalls zusätzlich bei Drücken von maximal 2500 bar, bevorzugt bei Drücken von maximal 2000 bar, besonders bevorzugt bei Drücken von maximal 1500 bar und ganz besonders bevorzugt bei Drücken von maximal 750 bar durchgeführt.

Bei der Extrusion, auch als Strangpressen bezeichnet, werden feste bis dickflüssige härtbare thermoplastische Formmassen unter Druck kontinuierlich aus einer formgebenden Öffnung, vorzugsweise als Düse, Matrize oder Mundstück bezeichnet, herausgepresst. Dabei entstehen Erzeugnisse mit dem Querschnitt der Öffnung in theoretisch beliebiger Länge **(http://de.wikipedia.org/wiki/Extrusion_(Verfahrenstechnik).** Die grundsätzlichen Verfahrensschritte des Profil-Extrusionsverfahrens, einer Verfahrensform der Extrusion, sind:

1. Plastifizieren und Bereitstellen der thermoplastischen Schmelze in einem Extruder,

2. Extrusion des thermoplastischen Schmelzestrangs durch eine Kalibrierhülse, die den Querschnitt des zu extrudierenden Profils aufweist,

3. Abkühlung des extrudierten Profils in einem Kalibriertisch,

4. Weitertransport des Profils mit einem Abzug hinter dem Kalibriertisch,

5. Ablängen des zuvor endlosen Profils in einer Schneideanlage,

6. Sammeln der abgelängten Profile an einem Sammeltisch.

Eine Beschreibung der Profilextrusion von Polyamid 6 und Polyamid 66 erfolgt in Kunststoff-Handbuch 3/4, Polyamide, Carl Hanser Verlag, München 1998, Seite 374-384**.**

Das Verfahren des Blasformens ist beispielsweise in **http://www.blasformen.com/** beschrieben. Beim Blasformen wird im ersten Verfahrensschritt mittels eines beheizten Extruders Kunststoffgranulat eingezogen, verdichtet, entgast, aufgeheizt, plastifiziert und zu einem plastischen Kunststoffstrang homogenisiert. Im nächsten Schritt wird die Kunststoffmasse in einen an den Extruder angeflanschten Schlauchkopf geführt. Dort wird die Kunststoffschmelze zu einem Schlauch geformt, der senkrecht aus einer Düse nach unten austritt. Der Schlauchdurchmesser wird mit unterschiedlich großen Dorn- und Düsennormalien, die an den Schlauchkopf angeflanscht werden, an den zu fertigenden Artikel angepasst. Die Schlauchdicke und das daraus resultierende Gewicht der Blasformteile wird durch die Auswahl von unterschiedlichen Durchmesser-Differenzen von Dorn zu Düse vorbestimmt.

Der Spritzguss zeichnet sich dadurch aus, dass der Rohstoff, also die zu verarbeitende thermoplastische Formmasse enthaltend die erfindungsgemäß einzusetzenden Komponenten, bevorzugt in Granulatform, in einem beheizten zylindrischen Hohlraum aufgeschmolzen (plastifiziert) und als Spritzmasse unter Druck in einem temperierten Hohlraum gespritzt wird. Nach dem Abkühlen (Erstarren) der Masse wird das Spritzgussteil entformt.

Man unterscheidet

1. Plastifizieren / Aufschmelzen

2. Einspritzphase (Füllvorgang)

3. Nachdruckphase (wegen thermischer Kontraktion bei der Kristallisation)

4. Entformen.

Eine Spritzgießmaschine besteht aus einer Schließeinheit, der Spritzeinheit, dem Antrieb und der Steuerung. Zur Schließeinheit gehören feste und bewegliche Aufspannplatten für das Werkzeug, eine Stirnplatte sowie Säulen und Antrieb der beweglichen Werkzeugaufspannplatte (Kniehebelgelenk oder hydraulische Schließeinheit).

Eine Spritzeinheit umfasst den elektrisch beheizbaren Zylinder, den Antrieb der Schnecke (Motor, Getriebe) und die Hydraulik zum Verschieben der Schnecke und Spritzeinheit. Die Aufgabe der Spritzeinheit besteht darin, das Pulver bzw. das Granulat aufzuschmelzen, zu dosieren, einzuspritzen und nachzudrücken (wegen Kontraktion). Das Problem des Rückflusses der Schmelze innerhalb der Schnecke (Leckströmung) wird durch Rückstromsperren gelöst.

Im Spritzgießwerkzeug wird dann die einströmende Schmelze der zu verarbeitenden und die erfindungsgemäß einzusetzenden Komponenten enthaltenden Formmasse gelöst, gekühlt und somit das zu fertigende Bauteil gefertigt. Notwendig dazu sind immer wenigstens zwei Werkzeughälften. Beim Spritzguss unterscheidet man folgende Funktionskomplexe:

- Angusssystem
- Formbildende Einsätze
- Entlüftung
- Maschinen- und Kraftaufnahme
- Entformungssystem und Bewegungsübertragung
- Temperierung

Im Gegensatz zum Spritzguss wird bei der Extrusion ein endlos geformter Strang aus der erfindungsgemäß einzusetzenden Formmasse im Extruder eingesetzt, wobei der Extruder eine Maschine zur Herstellung von Erzeugnissen auf Basis thermoplastischer Formstücke ist. Man unterscheidet Einschneckenextruder und Doppelschneckenextruder sowie die jeweiligen Untergruppen, konventioneller Einschneckenextruder, förderwirksamer Einschneckenextruder, gegenläufiger Doppelschneckenextruder und gleichläufiger Doppelschneckenextruder.

Extrusionsanlagen zum Herstellen von Profilen bestehen aus: Extruder, Profil-Werkzeug, Kalibrierung, Kühlstrecke, Raupen- und Rollenabzug, Trennvorrichtung und Kipprinne.

Die vorliegende Erfindung betrifft folglich auch Erzeugnisse, bevorzugt Formteile, Formkörper oder Halbzeuge, erhältlich durch Extrusion oder Spritzguss der erfindungsgemäßen, wenigstens die Komponenten a), b), c), d) und e) sowie gegebenenfalls f) und gegebenenfalls g) enthaltenden Formmassen.

Die Zubereitung erfindungsgemäß einzusetzender Zusammensetzungen für die Herstellung von im Spritzguss, in der Extrusion oder zum Blasformen einzusetzender Formmassen erfolgt durch Mischen der einzelnen Komponenten a), b), c), d) und e) sowie gegebenenfalls weiterer Komponenten in wenigstens einem Mischaggregat, vorzugsweise

einem Compounder, besonders bevorzugt einem gleichsinnig drehenden Zweiwellenextruder. Durch diesen Mischvorgang, auch als Compoundieren bezeichnet, werden als Zwischenprodukte Formmassen erhalten, die in Form von Pulvern, Granulaten oder in Strangform einer weiteren Verarbeitung zur Verfügung gestellt werden. Diese Formmassen - auch als thermoplastische Formmassen bezeichnet - können entweder ausschließlich aus den Komponenten a), b), c), d) und e) bestehen, oder ggf. weitere Komponenten, vorzugsweise f) und/oder g) enthalten.

Die vorliegende Erfindung betrifft schließlich auch die Verwendung der durch Extrusion oder Spritzguss aus Formmassen, enthaltend wenigstens die Komponenten a), b), c), d) und e) sowie ggf. f) und ggf. g) hergestellten Erzeugnisse, bevorzugt Formteile, Formkörper oder Halbzeuge, für elektrische oder elektronische Bauteile. Diese erfindungsgemäßen Erzeugnisse können bevorzugt in der Kraftfahrzeug-, Elektro-, Elektronik-, Telekommunikations-, Solar-, Informationstechnologie-, Computer- Industrie, im Haushalt, Sport, in der Medizin oder in der Unterhaltungsindustrie angewandt werden. Insbesondere können erfindungsgemäße Erzeugnisse für Anwendungen eingesetzt werden, bei denen eine Langzeitfarbstabilität erforderlich ist. Bevorzugt für derartige Anwendungen ist die Verwendung für Formteile in der Elektrotechnik und in Fahrzeugen, insbesondere Hochvoltkomponenten in Fahrzeugen, insbesondere in Kraftfahrzeugen (KFZ).

## Beispiele

Zum Nachweis der erfindungsgemäß beschriebenen Verbesserungen der Eigenschaften wurden zunächst durch Compoundierung entsprechende Polyamid basierte Polymerzusammensetzungen angefertigt. Die einzelnen Komponenten wurden hierzu in einem Zweiwellenextruder (ZSK 26 Compounder der Fa. Coperion Werner & Pfleiderer (Stuttgart, Deutschland)) bei Temperaturen im Bereich von 270 und 300°C gemischt, als Strang ausgetragen, bis zur Granulierbarkeit abgekühlt und granuliert. Nach dem Trocknen (in der Regel zwei Tage bei 80°C im Vakuumtrockenschrank) erfolgte die Verarbeitung des Granulats bei Temperaturen im Bereich von 270 bis 290°C zu Normprüfkörpern für die jeweiligen Prüfungen.

Die Schlagzähigkeit nach **ISO 180-1U** (Izod) und die Bruchdehnung nach **ISO 527** wurden an spritzgegossenen nach **DIN EN ISO 1874-2** festgelegten Prüfkörpern im spritzfrischen Zustand bei 23°C bestimmt. Der spritzfrische Zustand, auch "dry as moulded", wird in der **DIN EN ISO 1874-2** definiert.

Der Lab-Farbraum (auch: CIELAB, CIEL*a*b*, Lab-Farben) beschreibt alle wahrnehmbaren Farben. Er nutzt einen dreidimensionalen Farbenraum, bei dem der Helligkeitswert L senkrecht auf der Farbebene (a, b) steht. Die L*-Achse beschreibt die Helligkeit (Luminanz) der Farbe mit Werten von 0 bis 100. In der Darstellung steht diese im Nullpunkt senkrecht auf der a*b*-Ebene. Sie kann auch als Neutralgrauachse bezeichnet werden, denn zwischen den Endpunkten Schwarz (L*=0) und Weiß (L*=100) sind alle unbunten Farben (Grautöne) enthalten. In Analogie zur Gegenfarbtheorie von Ewald Hering gibt die a-Koordinate die Farbart und Farbintensität zwischen Grün und Rot an und die b-Koordinate die Farbart und die Farbintensität zwischen Blau und Gelb. Je größer positive a- und b- und je kleiner negative a- und b-Werte, umso intensiver der Farbton. Falls a=0 und b=0, liegt ein unbunter Farbton auf der Helligkeitsachse vor. In den üblichen Softwareumsetzungen kann L Werte zwischen 0 und 100 annehmen und a und b können zwischen -128 und 127 variiert werden. Die Verfärbung von Polymer basierten Erzeugnisses durch die oxidative Schädigung der Polymermatrix wurde im Rahmen der vorliegenden Erfindung durch die Messung des Farbabstands ΔE über die Lagerungszeit bei hoher Temperatur bestimmt. Der Farbabstand ΔE zwischen zwei Farbreizen wurde nach der Gleichung $\Delta E = [(\Delta L^*)^2+(\Delta a^*)^2+(\Delta b^*)^2]^{1/2}$ gemäß **DIN EN ISO 11664-4** berechnet.

Im Rahmen der vorliegenden Erfindung erfolgte die Prüfung des Alterungsverhaltens in Form eines verbesserten Farberhalts bzw. einer verbesserten Farbstabilität durch Lagerung von spritzgegossenen Polyamid basierten Platten von 60mm • 40mm • 4 mm in einem Materialprüfschrank des Modells Binder FP115 bei Umluft bei Temperaturen von 150°C, im Rahmen der vorliegenden Erfindung auch als Heißluftalterung bezeichnet. Als Maß für die Verfärbung wurde der Farbabstand ΔE von spritzgegossenen Erzeugnissen auf Basis erfindungsgemäßer Zusammensetzungen nach Heißluftalterung über 500h vor und nach der Heißluftalterung durch die Messung der Farbwerte L*a*b* bestimmt.

$$\Delta E = [(\Delta L^*)^2+(\Delta a^*)^2+(\Delta b^*)^2]^{1/2}$$

Somit zeichnet sich erfindungsgemäß ein gutes Alterungsverhalten in Form eines verbesserten Farberhalts bzw. einer verbesserten Farbstabilität nach Heißluftalterung dadurch aus, dass die Farbänderung ΔE im Falle erfindungsgemäßer Erzeugnisse kleiner ausfällt als bei Erzeugnissen gemäß der Vergleichsbeispiele. Die Farbwerte L*a*b* der Proben wurden im Rahmen der vorliegenden Erfindung an Platten mit den Maßen 60mm • 40mm • 4 mm bestimmt und daraus nach **DIN EN ISO 11664-4** der Farbabstand ΔE berechnet. Die Farbmessung erfolgte dabei mit dem Spektralfotometer CM-2600d der Fa. Konica Minolta mit der CIE-Normlichtart D65 in Reflektion (10° Beobachterwinkel) mit Glanzausschluss (SCE=Specular Component Excluded).

Im Rahmen der vorliegenden Erfindung erfolgte die Prüfung des Alterungsverhaltens an Erzeugnissen basierend auf den erfindungsgemäßen Zusammensetzungen in Form einer verbesserten UV-Stabilität durch Lagerung von spritzgegossenen Platten mit den Maßen 60mm • 40mm • 4 mm in einem QUV Schnellbewitterungsgerät der Firma Q-Lab gemäß **DIN ISO 4892-2A** über 200h bei 80°C, 340 nm und 1,55 W/m$^2$ ohne Beregnung, im Folgenden als UV-Lagerung bezeichnet. Als Maß für die Verfärbung wurde im Rahmen der vorliegenden Erfindung der Farbabstand ΔE von spritzgegossenen Erzeugnissen auf Basis erfindungsgemäßer Zusammensetzungen vor und nach UV-Lagerung für 200h durch die Messung der Farbwerte L*a*b* bestimmt.

$$\Delta E = [(\Delta L^*)^2+(\Delta a^*)^2+(\Delta b^*)^2]^{1/2}$$

Somit zeichnet sich erfindungsgemäß ein gutes Alterungsverhalten in Form einer verbesserten UV-Stabilität nach UV-Lagerung dadurch aus, dass die Farbänderung ΔE im Falle erfindungsgemäßer Erzeugnisse kleiner ausfiel im Vergleich zu Erzeugnissen ohne Komponente d). Die Farbwerte L*a*b* der Proben wurden im Rahmen der vorliegenden Erfindung an Platten mit den Maßen 60mm • 40mm • 4 mm bestimmt und daraus nach **DIN EN ISO 11664-4** der Farbabstand ΔE berechnet.

Im Rahmen der vorliegenden Erfindung erfolgte die Prüfung des Alterungsverhaltens in Form eines Erhalts der Schlagzähigkeit und der Bruchdehnung durch Lagerung von spritzgegossenen, nach **DIN EN ISO 1874-2** festgelegten Prüfkörpern in einem Materialprüfschrank des Modells Binder FP115 bei Umluft bei Temperaturen von 150°C.

Die Schlagzähigkeit wurde gemäß **ISO 180-1U** und die Bruchdehnung gemäß **ISO 527** bei 23°C an diesen Probekörpern vor und nach Lagerung über 500 h bei 150°C bestimmt.

**Edukte:**

Komponente a) Polyamid 6 (Durethan® B29, Fa. Lanxess Deutschland GmbH)

Komponente b) 4,4'-Bis(α,α-dimethylbenzyl)diphenylamin, CAS No. 10081-67-1 (Rianox® 445 der Firma Rialon Cooperation)

Komponente c) Natriumhypophosphit wasserfrei CAS No. 7681-53-0 (Sigma Aldrich, extra pure)

Komponente d) Ultranox® 626A, CAS No. 26741-53-7 (Fa. Brenntag)

Komponente e) Glasfaser (CS7928, Fa. Lanxess Deutschland GmbH)

**Tab. 1:**

| | | Bsp.1 | Vgl.1 | Vgl. 2 |
|---|---|---|---|---|
| Komponente a) | Gew. % | 68,5 | 69 | 70 |
| Komponente b) | Gew. % | 0,3 | 0,8 | 0 |
| Komponente c) | Gew. % | 1,0 | 0,2 | 0 |
| Komponente d) | Gew. % | 0,2 | 0 | 0 |
| Komponente e) | Gew. % | 30 | 30 | 30 |
| Farbänderung ΔE nach Heißluftalterung 500 h, 150°C | | 15 | 21 | 40 |
| Farbänderung ΔE nach Bewitterung 200h, 80°C, 340 nm und 1,55 W/m$^2$ | | 14 | 34 | 5 |
| Erhalt der Schlagzähigkeit ISO180-1U, 23°C, nach Heißluftalterung 500h, 150°C | % | 55 | 57 | 41 |
| Erhalt der Bruchdehnung ISO527, 23°C, nach Heißluftalterung 500h, 150°C | % | 98 | 86 | 67 |

Die Ergebnisse in **Tab. 1** zeigen, dass Erzeugnisse auf Basis erfindungsgemäßer Zusammensetzungen gemäß Beispiel 1 im Vergleich zu Vergleichsbeispiel 1, in welchem Komponente d) nicht eingesetzt wurde, überraschenderweise eine höhere UV-Stabilität in Form einer geringeren Farbänderung ΔE nach Bewitterung für 200h bei 80°C, 340 nm und 1,55 W/m$^2$ im Bereich ΔE < 20 aufwies. Ein kleinerer ΔE Wert bedeutet im Rahmen der vorliegenden Erfindung eine

geringe Farbänderung. Wenn sich die Farbe nach der Lagerung überhaupt nicht ändern würde, wäre das $\Delta E = 0$.

Zudem zeigte sich überraschenderweise für Beispiel 1 ein verbessertes Alterungsverhalten in Form eines verbesserten Farberhalts bzw. einer verbesserten Farbstabilität nach Heißluftalterung über 500h bei 150°C mit $\Delta E$ zwischen $\Delta E = 0$ und 15 im Vergleich zu Vergleichsbeispiel 1 ohne die Komponente d). Gleichzeitig war der Erhalt der Schlagzähigkeit und der Bruchdehnung nach Heißluftalterung bei 150°C für 500h im Vergleich zu Vergleichsbeispiel 1 ohne Komponente d) verbessert. Ebenso treffen die genannten Verbesserungen im Beispiel 1 auch im Vergleich zum Vergleichsbeispiel 2 zu, worin keine der Komponenten b), c), d) und e) eingesetzt wurde.

## Patentansprüche

**1.** Zusammensetzungen sowie Erzeugnisse enthaltend

a) wenigstens ein Polyamid,
b) wenigstens ein sekundäres aromatisches Amin,
c) wenigstens einem Phosphinsäurederivat der allgemeinen Formel (I),

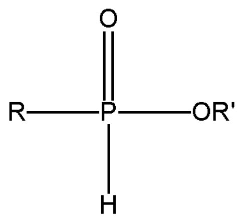

(I)

worin R für ein Wasserstoffatom oder für eine Alkyl-, Cycloalkyl- oder Aryl-Gruppe steht, und
R' für ein Alkalimetall, ein Erdalkalimetall, ein Metall der 12. und 13. Gruppe des Periodensystems der Elemente, ein Ammonium-Ion oder für eine $C_1$-$C_{10}$ Alkylgruppe steht,

d) Bis(2,4-di-t-butylphenyl)pentaerythritoldiphosphit, und
e) Glasfasern,
mit der Maßgabe, dass auf 100 Massenanteile der Komponente a)
0,1 bis 3 Massenanteile der Komponente b),
0,01 bis 3 Massenanteile der Komponente c),
0,01 bis 3 Massenanteile der Komponente d), und
5 bis 200 Massenanteile der Komponente e) eingesetzt werden.

**2.** Zusammensetzungen sowie Erzeugnisse gemäß Anspruch 1, **dadurch gekennzeichnet, dass** als Komponente a) Polyamid 6, Polyamid 6.6, Polyamid 4.6 und/oder teilaromatische Copolyamide eingesetzt werden.

**3.** Zusammensetzungen sowie Erzeugnisse gemäß Anspruch 1 oder 2, **dadurch gekennzeichnet, dass** zusätzlich zu den Komponenten a), b), c), d) und e) noch wenigstens ein Flammschutzmittel als Komponente f) zu 3 bis 100 Massenanteilen, bevorzugt zu 5 bis 80 Massenanteilen, besonders bevorzugt zu 10 bis 50 Massenanteilen, jeweils bezogen auf 100 Massenanteile der Komponente a) eingesetzt wird.

**4.** Zusammensetzungen sowie Erzeugnisse gemäß einem oder mehreren der Ansprüche 1 bis 3, **dadurch gekennzeichnet, dass** als Komponente b) sekundäre aromatische Amine der allgemeinen Formel (II)

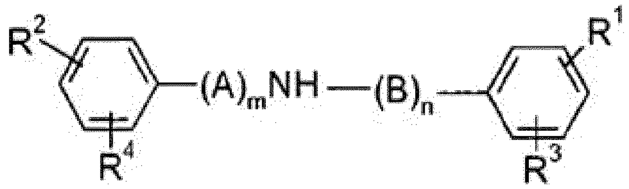

(II)

eingesetzt werden, worin

m und n jeweils unabhängig voneinander für 0 oder 1 stehen,
A und B jeweils unabhängig voneinander für ein mit $C_1$-$C_4$-Alkyl- oder Phenyl-substituiertes tertiäres C-Atom stehen,
$R^1$ und $R^2$ jeweils unabhängig voneinander für Wasserstoff, für eine $C_1$-$C_6$-Alkylgruppe in ortho- und para-Stellung, welche gegebenenfalls durch 1 bis 3 Phenylreste substituiert sein kann, oder für Halogen, Carboxyl oder ein Metallsalze dieser Carboxylgruppe stehen,
$R^3$ und $R^4$ jeweils unabhängig voneinander für Wasserstoff oder für einen Methylrest in ortho- und para-Stellung stehen, oder für eine tertiäre $C_3$-$C_9$-Alkylgruppe in ortho oder para-Stellung stehen, welche gegebenenfalls durch 1 bis 3 Phenylreste substituiert sein kann.

**5.** Zusammensetzungen sowie Erzeugnisse gemäß einem oder mehreren der Ansprüche 1 bis 3, **dadurch gekennzeichnet, dass** die als Komponente b) einzusetzenden sekundären aromatischen Amine auszuwählen sind aus der Gruppe

4,4'-Bis(α,α'-tertiäroctyl)diphenylamin,
4,4'Bis(α,α'-dimethylbenzyl)diphenylamin,
4-(1,1,3,3-Tetramethylbutyl)4'triphenylmethyldiphenylamin,
4,4'Bis(α,α'-p-trimethylbenzyl)diphenylamin,
2,4,4'Tris(α,α'-p-trimethylbenzyl)diphenylamin,
2,2'-Dibromo,4,4'-bis(α,α'-dimethylbenzyl) diphenylamin,
4,4'-Bis(α,α-dimethylbenzyl)-2-carboxydiphenylamin-nickel-4,4'-bis(α,α-dimethylbenzyl)-diphenylamin,
2-sec-Butyl-4,4'-bis(α,α-dimethylbenzyl)diphenylamin,
4,4'-Bis(α,α-dimethylbenzyl)-2-(α-methlheptyl)diphenylamin,
2-(α-Methylpentyl)4,4'-ditrityldiphenylamin,
4-α,α-Dimethylbenzyl-4'-isopropoxydiphenylamin,
2-(α-Methylheptyl)-4'-(α,α-dimethylbenzyl)diphenylamin,
2-(α-Methylpentyl)-4'- trityldiphenylamin,
4,4'-Bis(tertiary-butyl)diphenylamin,

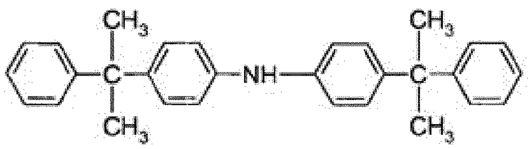
,

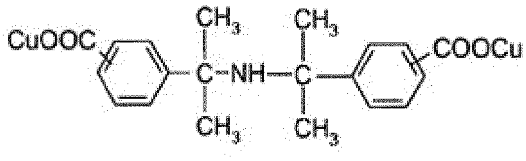
,

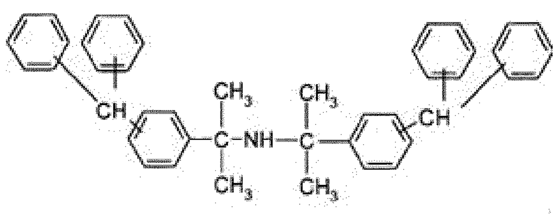

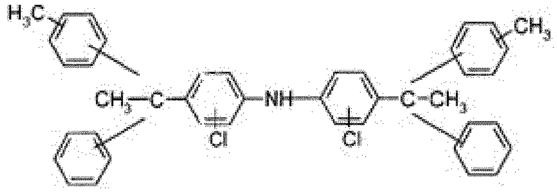
,

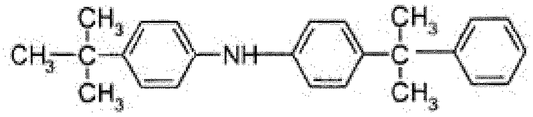

,

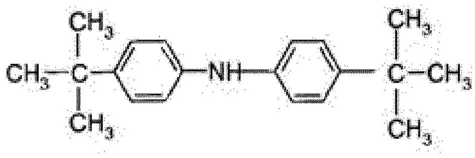

,

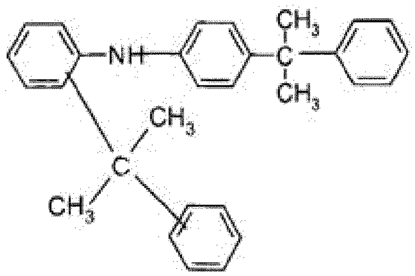

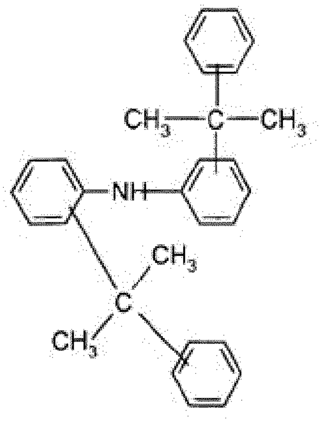

,

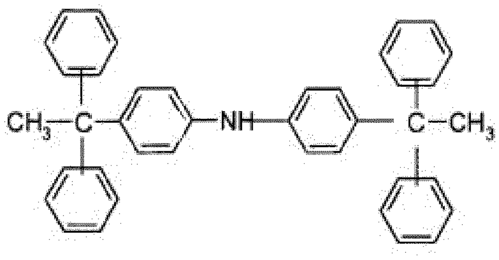

,

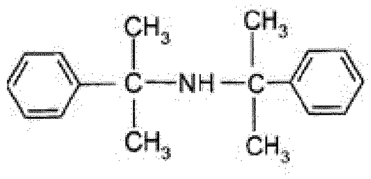

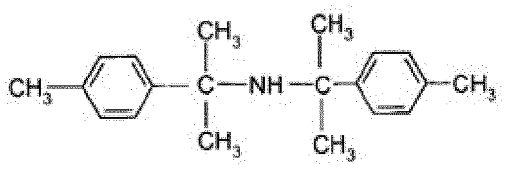

,

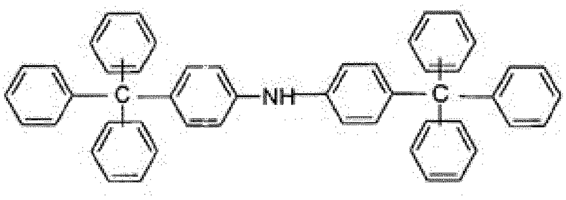

,

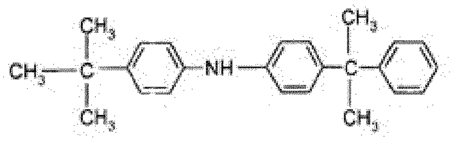

,

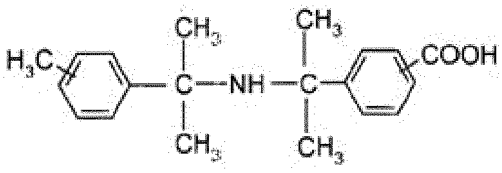

,

und

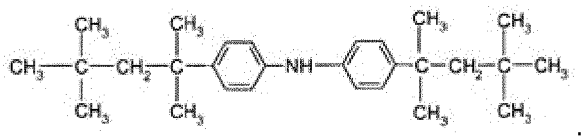

.

6. Zusammensetzungen sowie Erzeugnisse gemäß einem oder mehreren der Ansprüche 1 bis 3, **dadurch gekennzeichnet, dass** als Komponente b) 4,4'Bis(α,α'-dimethylbenzyl)diphenylamin eingesetzt wird.

7. Zusammensetzungen sowie Erzeugnisse gemäß einem oder mehreren der Ansprüche 1 bis 6, **dadurch gekennzeichnet, dass** als Komponente c) Salze der Phosphinsäure eingesetzt werden, wobei es sich auch um Hydrate der Salze handeln kann.

8. Zusammensetzungen sowie Erzeugnisse gemäß einem oder mehreren der Ansprüche 1 bis 6, **dadurch gekennzeichnet, dass** als Komponente c) Alkali-, Erdalkalimetallsalze sowie Metallsalze der 12. oder 13. Gruppe des Periodensystems der Phosphinsäure eingesetzt werden, wobei es sich auch um Hydrate der Salze handeln kann.

9. Zusammensetzungen sowie Erzeugnisse gemäß einem oder mehreren der Ansprüche 1 bis 6, **dadurch gekennzeichnet, dass** als Komponente c) Natriumhypophosphit oder Natriumhypophosphit Monohydrat eingesetzt wird.

10. Zusammensetzungen sowie Erzeugnisse gemäß einem oder mehreren der Ansprüche 1 bis 9, **dadurch gekennzeichnet, dass** diese

a) Polyamid 6 oder Polyamid 66,
b) 4,4'Bis(α,α'-dimethylbenzyl)diphenylamin,
c) Natriumhypophosphit oder Natriumhypophosphit Monohydrat,

d) Bis(2,4-di-t-butylphenyl)pentaerythritoldiphosphit, und
e) Glasfasern,
enthalten mit der Maßgabe, dass auf 100 Massenanteile der Komponente a)
0,1 bis 3 Massenanteile, bevorzugt 0,3 bis 2 Massenanteile, besonders bevorzugt 0,35 bis 1.5 Massenanteile der Komponente b),
0,01 bis 3 Massenanteile, bevorzugt 0,05 bis 2 Massenanteile, besonders bevorzugt 0,1 bis 1,7 Massenanteile der Komponente c),
0,01 bis 3 Massenanteile, bevorzugt 0,05 bis 1 Massenanteile, der Komponente d), und
5 bis 200 Massenanteile, bevorzugt 15 bis 160 Massenanteile, besonders bevorzugt 30 bis 150 Massenanteile, der Komponente e) eingesetzt werden.

**11.** Verwendung von Mischungen enthaltend

b) wenigstens ein sekundäres aromatisches Amin und
c) wenigstens ein Phosphinsäurederivat der allgemeinen Formel (I)

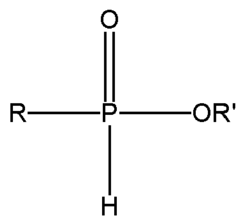
(I)

worin R für ein Wasserstoffatom oder für eine Alkyl-, Cycloalkyl- oder Aryl-Gruppe steht, und R' für ein Alkalimetall, ein Erdalkalimetall, ein Metall der 12. oder 13. Gruppe des Periodensystems der Elemente, ein Ammonium-Ion oder für eine $C_1$-$C_{10}$ Alkylgruppe steht,
zur Herstellung glasfaserverstärkter Polyamid basierter Erzeugnisse mit geringer Farbänderung ΔE berechnet gemäß DIN EN ISO 11664-4 nach Heißluftlagerung über 500h bei 150°C und/oder geringer Farbänderung ΔE berechnet gemäß DIN EN ISO 11664-4 nach UV-Lagerung gemäß DIN ISO 4892-2A über 200h bei 80°C, 340 nm und 1,55 W/$m^2$ ohne Beregnung und/oder Erhalt der Schlagzähigkeit gemessen nach ISO180-1U und/oder Erhalt der Bruchdehnung gemessen nach ISO 527 nach Heißluftalterung über 500h bei 150°C mit der Maßgabe, dass auf 100 Massenanteile wenigstens eines mit 5 bis 200 Massenanteilen als Komponente e) einzusetzenden Glasfasern verstärkten und als Komponente a) einzusetzenden Polyamids,
0,1 bis 3 Massenanteile der Komponente b), 0,01 bis 3 Massenanteile der Komponente c), und 0,01 bis 3 Massenanteile bis(2,4-di-t-butylphenyl)pentaerythritoldiphosphit als Komponente d) eingesetzt werden.

**12.** Verwendung gemäß Anspruch 11, **dadurch gekennzeichnet, dass** als Komponente a) Polyamid 6 oder Polyamid 66, als Komponente b) 4,4'Bis(α,α'-dimethylbenzyl)diphenylamin und als Komponente c) Natriumhypophosphit oder Natriumhypophosphit Monohydrat eingesetzt werden.

**13.** Verfahren zur Verringerung einer Farbänderung ΔE berechnet gemäß DIN EN ISO 11664-4 über 500h bei 150°C und/oder zur Verringerung einer Farbänderung ΔE berechnet gemäß DIN EN ISO 11664-4 nach UV-Bestrahlung gemäß DIN ISO 4892-2A über 200h bei 80°C, 340 nm und 1,55 W/$m^2$ ohne Beregnung und/oder zum Erhalt der nach ISO180-1U zu bestimmenden Schlagzähigkeit und/oder zum Erhalt der nach ISO 527 zu bestimmenden Bruchdehnung nach Heißluftalterung über 500h bei 140°C, **dadurch gekennzeichnet, dass** man Mischungen enthaltend

b) wenigstens ein sekundäres aromatisches Amin,
c) wenigstens ein Phosphinsäurederivat der allgemeinen Formel (I)

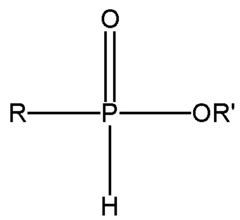
(I)

worin R für ein Wasserstoffatom oder für eine Alkyl-, Cycloalkyl- oder Aryl-Gruppe steht, und R' für ein Alkalimetall, ein Erdalkalimetall, ein Metall der 12. oder 13. Gruppe des Periodensystems der Elemente, ein Ammonium-Ion oder für eine $C_1$-$C_{10}$ Alkylgruppe steht, und
d) Bis(2,4-di-t-butylphenyl)pentaerythritoldiphosphit,
in glasfaserverstärkten Polyamid basierten Erzeugnissen einsetzt mit der Maßgabe,
dass man auf 100 Massenanteile wenigstens eines als Komponente a) einzusetzenden Polyamids und 5 bis 200 Massenanteilen der als Komponente e) einzusetzenden Glasfasern
0,1 bis 3 Massenanteile der Komponente b), 0,01 bis 3 Massenanteile der Komponente c) und 0,01 bis 3 Massenanteile der Komponente d) einsetzt.

**14.** Verfahren gemäß Anspruch 13, **dadurch gekennzeichnet, dass** als Komponente a) Polyamid 6 oder Polyamid 66, als Komponente b) 4,4'Bis($\alpha$,$\alpha$'-dimethylbenzyl)diphenylamin und als Komponente c) Natriumhypophosphit oder Natriumhypophosphit Monohydrat eingesetzt werden.

## Claims

**1.** Compositions and products containing

a) at least one polyamide,
b) at least one secondary aromatic amine,
c) at least one phosphinic acid derivative of the general formula (I),

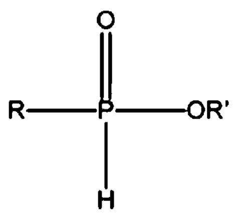

(I)

wherein R stands for a hydrogen atom or for an alkyl, cycloalkyl, or aryl group, and
R' stands for an alkali metal, an alkaline earth metal, a metal of the 12th and 13th group of the periodic system of the elements, an ammonium ion, or for a $C_1$-$C_{10}$ alkyl group,

d) bis(2,4-di-t-butylphenyl)pentaerythritol diphosphite, and
e) glass fibers,
with the proviso that for 100 parts by mass of component a)
0.1 to 3 parts by mass of component b),
0.01 to 3 parts by mass of component c),
0.01 to 3 parts by mass of component d), and
5 to 200 parts by mass of component e) are used.

**2.** Compositions and products according to Claim 1, **characterized in that** polyamide 6, polyamide 6.6, polyamide 4.6, and/or partially aromatic copolyamides are used as component a).

**3.** Compositions and products according to Claim 1 or 2, **characterized in that** in addition to components a), b), c), d), and e), at least one flame retardant is used as component f) in 3 to 100 parts by mass, preferably 5 to 80 parts by mass, particularly preferably 10 to 50 parts by mass, each in relation to 100 parts by mass of component a).

**4.** Compositions and products according to one or more of Claims 1 to 3, **characterized in that** secondary aromatic amines of general formula (II) are used as component b)

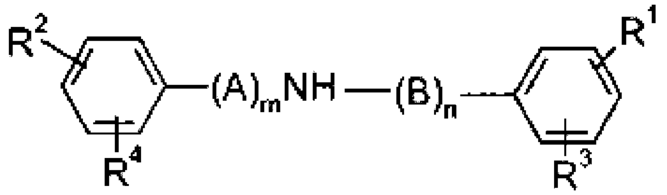

(II),

wherein

m and n each independently of one another stand for 0 or 1,
A and B each independently of one another stand for a tertiary C atom substituted with $C_1$-$C_4$-alkyl or phenyl,
$R^1$ and $R^2$ each independently of one another stand for hydrogen, for a $C_1$-$C_6$-alkyl group in ortho and para position, which can possibly be substituted by 1 to 3 phenyl radicals, or for halogen, carboxyl, or a metal salt of this carboxyl group,
$R^3$ and $R^4$ each independently of one another stand for hydrogen or for a methyl radical in ortho and para position, or stand for a tertiary $C_3$-$C_9$-alkyl group in ortho or para position, which can possibly be substituted by 1 to 3 phenyl radicals.

**5.** Compositions and products according to one or more of Claims 1 to 3, **characterized in that** the secondary aromatic amines to be used as component b) are to be selected from the group

4,4'-bis(α,α'-tertiaryoctyl)diphenylamine,
4,4'-bis(α,α'-dimethylbenzyl)diphenylamine,
4-(1,1,3,3-tetramethylbutyl)-4'-triphenylmethyldiphenylamine,
4,4'-bis(α,α'-p-trimethylbenzyl)diphenylamine,
2,4,4'-tris(α,α'-p-trimethylbenzyl)diphenylamine,
2,2'-dibromo-4,4'-bis(α,α'-dimethylbenzyl)diphenylamine,
4,4'-bis(α,α-dimethylbenzyl)-2-carboxydiphenylamine-nickel-4,4'-bis(α,α-dimethylbenzyl)diphenylamine,
2-sec-butyl-4,4'-bis(α,α-dimethylbenzyl)diphenylamine,
4,4'-bis(α,α-dimethylbenzyl)-2-(α-methylheptyl)diphenylamine, 2-(α-methylpentyl)-4,4'-ditrityldiphenylamine, 4-α,α-dimethylbenzyl-4'-isopropoxydiphenylamine, 2-(α-methylheptyl)-4'-(α,α-dimethylbenzyl)diphenylamine, 2-(α-methylpentyl)-4'-trityldiphenylamine, 4,4'-bis(tertiary-butyl)diphenylamine,

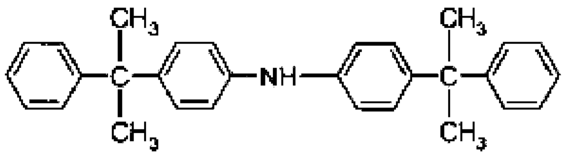

,

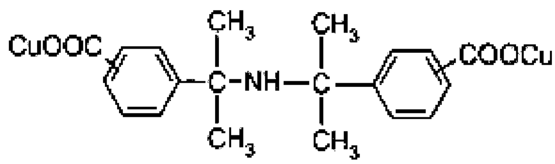

,

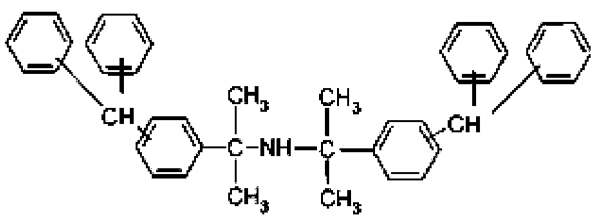

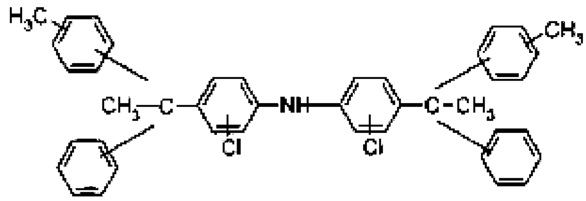

,

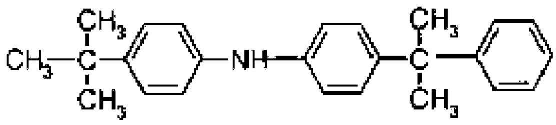

,

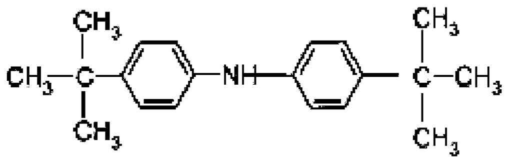

,

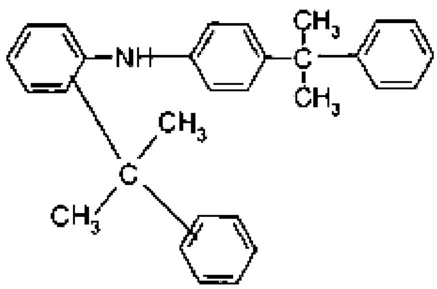

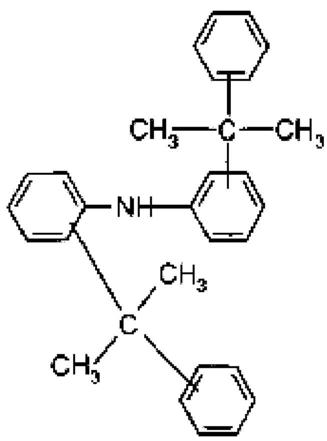

,

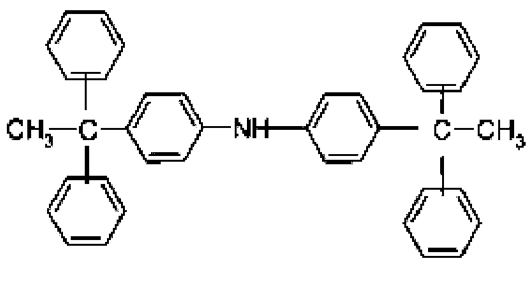

,

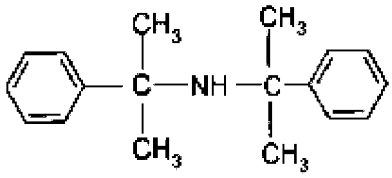

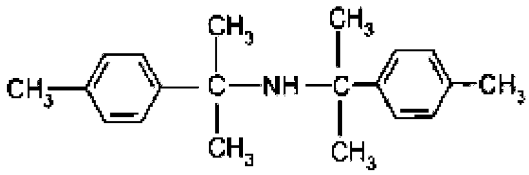

,

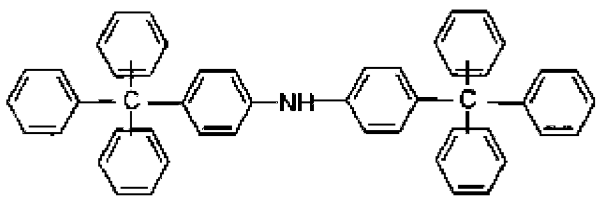

,

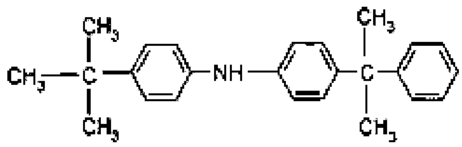

,

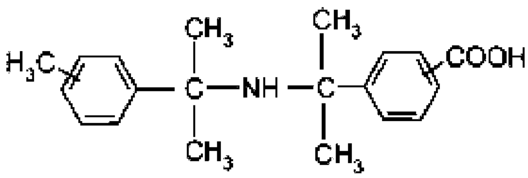

,

and

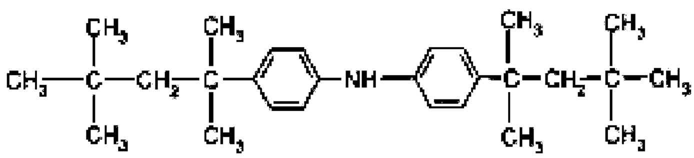

.

6. Compositions and products according to one or more of Claims 1 to 3, **characterized in that** 4,4'-bis(α,α'-dimethylbenzyl)diphenylamine is used as component b).

7. Compositions and products according to one or more of Claims 1 to 6, **characterized in that** salts of phosphinic acid are used as component c), wherein these can also be hydrates of the salts.

8. Compositions and products according to one or more of Claims 1 to 6, **characterized in that** alkali and alkaline earth metal salts and metal salts of the 12th or 13th group of the periodic system of phosphinic acid are used as component c), wherein these can also be hydrates of the salts.

9. Compositions and products according to one or more of Claims 1 to 6, **characterized in that** sodium hypophosphite or

sodium hypophosphite monohydrate is used as component c).

**10.** Compositions and products according to one or more of Claims 1 to 9, **characterized in that** these contain

a) polyamide 6 or polyamide 66,
b) 4,4'-bis($\alpha$,$\alpha$'-dimethylbenzyl)diphenylamine,
c) sodium hypophosphite or sodium hypophosphite monohydrate,
d) bis(2,4-di-t-butylphenyl)pentaerythritol diphosphite, and
e) glass fibers,
with the proviso that for 100 parts by mass of component a)
0.1 to 3 parts by mass, preferably 0.3 to 2 parts by mass, particularly preferably 0.35 to 1.5 parts by mass of component b),
0.01 to 3 parts by mass, preferably 0.05 to 2 parts by mass, particularly preferably 0.1 to 1.7 parts by mass of component c),
0.01 to 3 parts by mass, preferably 0.05 to 1 part by mass, of component d), and
5 to 200 parts by mass, preferably 15 to 160 parts by mass, particularly preferably 30 to 150 parts by mass, of component e) are used.

**11.** Use of mixtures containing

b) at least one secondary aromatic amine, and
c) at least one phosphinic acid derivative of the general formula (I)

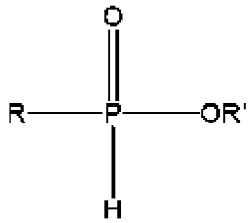
(I)

wherein R stands for a hydrogen atom or for an alkyl, cycloalkyl, or aryl group, and R' stands for an alkali metal, an alkaline earth metal, a metal of the 12th or 13th group of the periodic system of the elements, an ammonium ion, or for a $C_1$-$C_{10}$ alkyl group,
for producing glass-fiber-reinforced polyamide-based products with low color change $\Delta$E calculated according to DIN EN ISO 11664-4 after hot air storage over 500 hours at 150°C and/or low color change $\Delta$E calculated according to DIN EN ISO 11664-4 after UV storage according to DIN ISO 4892-2A over 200 hours at 80°C, 340 nm, and 1.55 W/$m^2$ without rain and/or retention of the impact resistance measured according to ISO180-1U and/or retention of the elongation at fracture measured according to ISO 527 after hot air aging over 500 hours at 150°C, with the proviso that for 100 parts by mass at least one polyamide reinforced with 5 to 200 parts by mass of glass fibers to be used as component e) and to be used as component a),
0.1 to 3 parts by mass of component b), 0.01 to 3 parts by mass of component c), and 0.01 to 3 parts by mass of bis(2,4-di-t-butylphenyl)pentaerythritol diphosphite as component d) are used.

**12.** Use according to Claim 11, **characterized in that** polyamide 6 or polyamide 66 is used as component a), 4,4'-bis($\alpha$,$\alpha$'-dimethylbenzyl)diphenylamine is used as component b), and sodium hypophosphite or sodium hypophosphite monohydrate is used as component c).

**13.** Method for reducing a color change $\Delta$E calculated according to DIN EN ISO 11664-4 over 500 hours at 150°C and/or for reducing a color change $\Delta$E calculated according to DIN EN ISO 11664-4 after UV radiation according to DIN ISO 4892-2A over 200 hours at 80°C, 340 nm, and 1.55 W/$m^2$ without rain and/or for retaining the impact resistance to be determined according to ISO180-1U and/or for retaining the elongation at fracture to be determined according to ISO 527 after hot air aging over 500 hours at 140°C, **characterized in that** mixtures containing

b) at least one secondary aromatic amine,
c) at least one phosphinic acid derivative of the general formula (I)

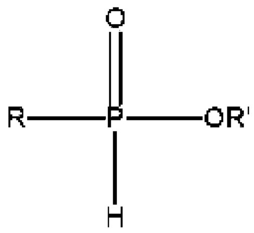

(I)

wherein R stands for a hydrogen atom or for an alkyl, cycloalkyl, or aryl group, and R' stands for an alkali metal, an alkaline earth metal, a metal of the 12th or 13th group of the periodic system of the elements, an ammonium ion, or for a $C_1$-$C_{10}$ alkyl group, and
d) bis(2,4-di-t-butylphenyl)pentaerythritol diphosphite,
are used in glass-fiber-reinforced polyamide-based products with the proviso
that for 100 parts by mass of at least one polyamide to be used as component a) and 5 to 200 parts by mass of glass fibers to be used as component e),
0.1 to 3 parts by mass of component b), 0.01 to 3 parts by mass of component c), and 0.01 to 3 parts by mass of component d) are used.

**14.** Method according to Claim 13, **characterized in that** polyamide 6 or polyamide 66 is used as component a), 4,4'-bis($\alpha$,$\alpha$'-dimethylbenzyl)diphenylamine is used as component b), and sodium hypophosphite or sodium hypophosphite monohydrate is used as component c).

## Revendications

**1.** Compositions ainsi que produits contenant

a) au moins un polyamide,
b) au moins une amine secondaire aromatique,
c) au moins un dérivé d'acide phosphinique de formule générale (1),

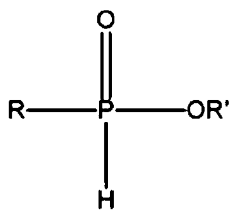

(I)

dans laquelle R représente un atome d'hydrogène ou un groupe alkyle, cycloalkyle ou aryle et
R' représente un métal alcalin, un métal alcalino-terreux, un métal du groupe 12 ou 13 du tableau périodique des éléments, un ion d'ammonium ou un groupe $C_1$-$C_{10}$-alkyle,

d) du diphosphite de bis(2,4-di-t-butylphényl)pentaérythritol et
e) des fibres de verre,
à condition qu'on utilise, pour 100 parties en masse du composant a)
0,1 à 3 parties en masse du composant b),
0,01 à 3 parties en masse du composant c),
0,01 à 3 parties en masse du composant d) et
5 à 200 parties en masse du composant e).

**2.** Compositions ainsi que produits selon la revendication 1, **caractérisés en ce qu'**on utilise, comme composant a), du polyamide 6, du polyamide 6.6, du polyamide 4.6 et/ou des copolyamides partiellement aromatiques.

**3.** Compositions ainsi que produits selon la revendication 1 ou 2, **caractérisés en ce qu'**on utilise, en plus des composants a), b), c), d) et e), encore au moins un agent ignifuge comme composant f) à raison de 3 à 100 parties en masse, de préférence à raison de 5 à 80 parties en masse, de manière particulièrement préférée à raison de 10 à 50

parties en masse, à chaque fois par rapport à 100 parties en masse du composant a).

**4.** Compositions ainsi que produits selon l'une ou plusieurs des revendications 1 à 3, **caractérisés en ce qu'**on utilise, comme composant b), des amines secondaires aromatiques de formule générale (II)

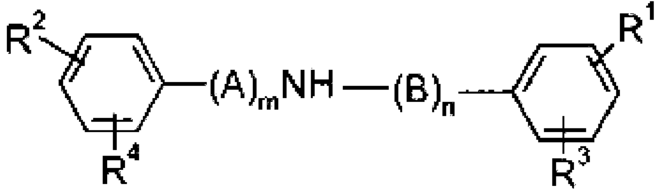

(II)

dans laquelle

m et n représentent, à chaque fois indépendamment l'un de l'autre, 0 ou 1,
A et B représentent, à chaque fois indépendamment l'un de l'autre, un atome de carbone tertiaire substitué par $C_1$-$C_4$-alkyle ou par phényle,
$R^1$ et $R^2$ représentent, à chaque fois indépendamment l'un de l'autre, un groupe $C_1$-$C_6$-alkyle en position ortho ou para, qui peut le cas échéant être substitué par 1 à 3 radicaux phényle, ou halogène, carboxyle ou un sel métallique de ce groupe carboxyle,
$R^3$ et $R^4$ représentent, à chaque fois indépendamment l'un de l'autre, hydrogène ou un radical méthyle en position ortho ou para ou un groupe $C_3$-$C_9$-alkyle tertiaire en position ortho ou para, qui peut le cas échéant être substitué par 1 à 3 radicaux phényle.

**5.** Compositions ainsi que produits selon l'une ou plusieurs des revendications 1 à 3, **caractérisés en ce que** les amines secondaires aromatiques à utiliser comme composant b) sont à choisir dans le groupe

4,4'-bis(α,α'-tert-octyl)diphénylamine,
4,4'-bis(α,α'-diméthylbenzyl)diphénylamine,
4-(1,1,3,3-tétraméthylbutyl)-4'-triphénylméthyldiphénylamine,
4,4'-bis(α,α'-p-triméthylbenzyl)diphénylamine,
2,4,4'-tris(α,α'-p-triméthylbenzyl)diphénylamine,
2,2'-dibromo-4,4'-bis(α,α'-diméthylbenzyl)-diphénylamine,
4,4'-bis(α,α-diméthylbenzyl)-2-carboxydiphénylamine-nickel-4,4'-bis(α,α-diméthylbenzyl)-diphénylamine,
2-sec-butyl-4,4'-bis(α,α-diméthylbenzyl)diphénylamine,
4,4'-bis(α,α-diméthylbenzyl)-2-(α-méthylheptyl)diphénylamine,
2-(α-méthylpentyl)4,4'-ditrityldiphénylamine,
4-α,α-diméthylbenzyl-4'-isopropoxydiphénylamine,
2-(α-méthylheptyl)-4'-(α,α-diméthylbenzyl)diphénylamine,
2-(α-méthylpentyl)-4'-trityldiphénylamine,
4,4'-bis(tert-butyl)diphénylamine,

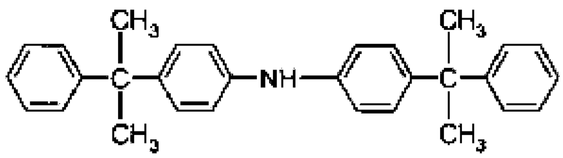

,

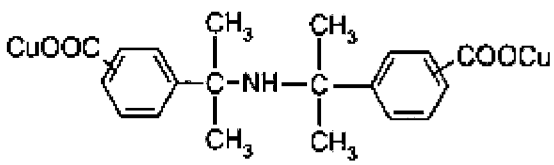

,

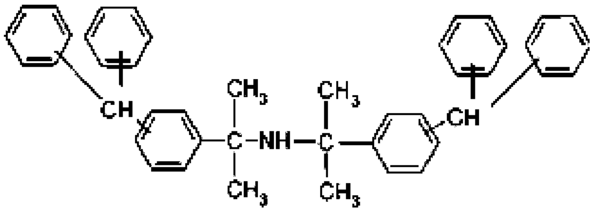

,

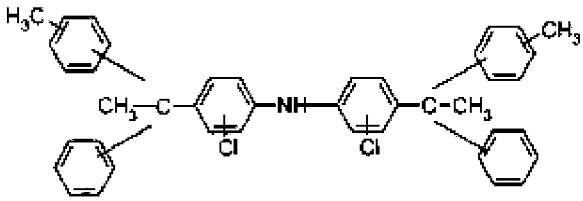

,

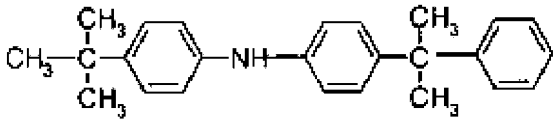

,

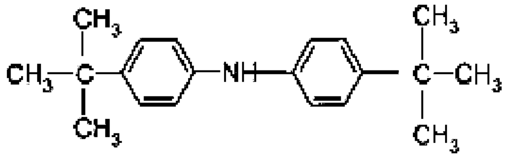

,

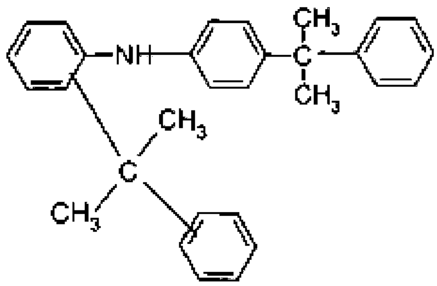

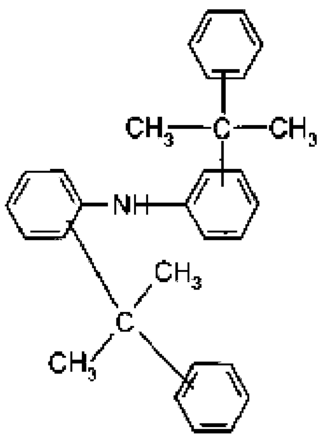

,

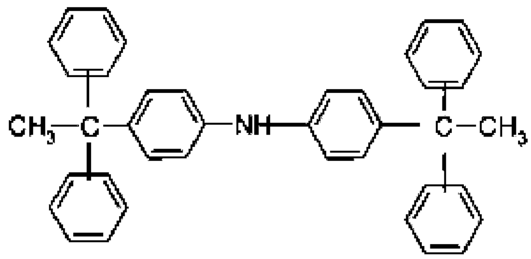

,

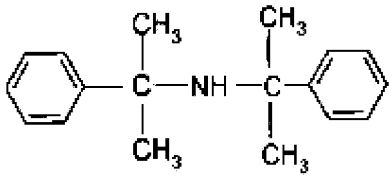

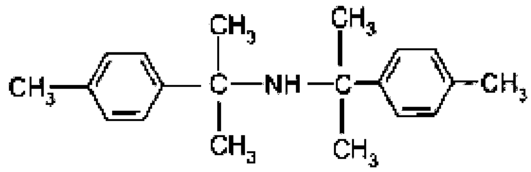

,

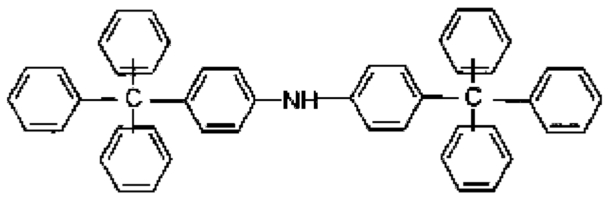

,

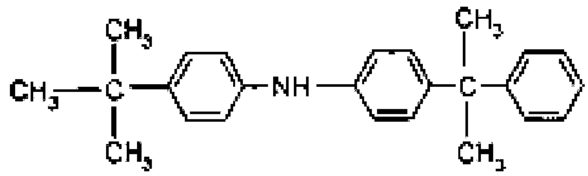

,

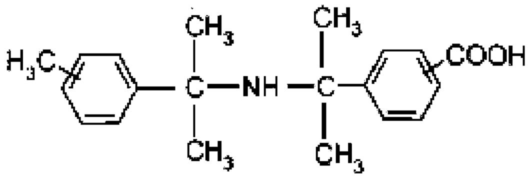

et

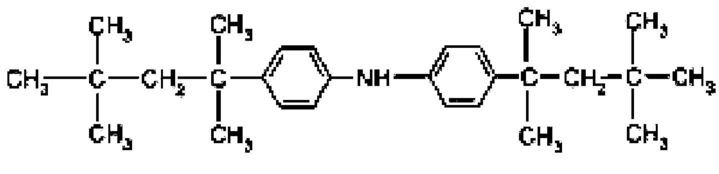

.

**6.** Compositions et produits selon l'une ou plusieurs des revendications 1 à 3, **caractérisés en ce qu'**on utilise, comme composant b), de la 4,4'-bis(α,α'-diméthylbenzyl)diphénylamine.

**7.** Compositions ainsi que produits selon l'une ou plusieurs des revendications 1 à 6, **caractérisés en ce qu'**on utilise, comme composant c), des sels de l'acide phosphinique, qui peuvent également être des hydrates des sels.

**8.** Compositions ainsi que produits selon l'une ou plusieurs des revendications 1 à 6, **caractérisés en ce qu'**on utilise, comme composant c), des sels de métal alcalin et alcalino-terreux ainsi que des sels métalliques du groupe 12 ou 13 du système périodique des éléments de l'acide phosphonique, qui peuvent également être des hydrates des sels.

**9.** Compositions et produits selon l'une ou plusieurs des revendications 1 à 6, **caractérisés en ce qu'**on utilise, comme composant c), de l'hypophosphite de sodium ou de l'hypophosphite de sodium monohydraté.

**10.** Compositions et produits selon l'une ou plusieurs des revendications 1 à 9, **caractérisés en ce qu'**ils contiennent

a) du polyamide 6 ou du polyamide 66,
b) de la 4,4'-bis(α,α'-diméthylbenzyl)diphénylamine,
c) de l'hypophosphite de sodium ou de l'hypophosphite de sodium monohydraté,
d) du diphosphite de bis(2,4-di-t-butylphényl)pentaérythritol et
e) des fibres de verre,
à condition que, pour 100 parties en masse du composant a), on utilise
0,1 à 3 parties en masse, de préférence 0,3 à 2 parties en masse, de manière particulièrement préférée 0,35 à 1,5 partie en masse du composant b),
0,01 à 3 parties en masse, de préférence 0,05 à 2 parties en masse, de manière particulièrement préférée 0,1 à 1,7 partie en poids du composant c),
0,01 à 3 parties en masse, de préférence 0,05 à 1 partie en masse, du composant d) et
5 à 200 parties en masse, de préférence 15 à 160 partie en masse, de manière particulièrement préférée 30 à 150 parties en masse, du composant e).

**11.** Utilisation de mélanges contenant

b) au moins une amine secondaire aromatique et
c) au moins un dérivé d'acide phosphinique de formule générale (I),

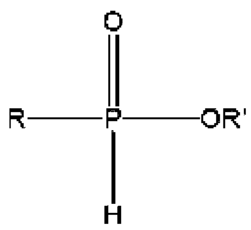
(I)

dans laquelle R représente un atome d'hydrogène ou un groupe alkyle, cycloalkyle ou aryle et R' représente un métal alcalin, un métal alcalino-terreux, un métal du groupe 12 ou 13 du système périodique des éléments, un ion d'ammonium ou un groupe $C_1$-$C_{10}$-alkyle,
pour la fabrication de produits à base de polyamide, renforcés par des fibres de verre, présentant un faible changement de couleur ΔE, calculé selon la norme DIN EN ISO 11664-4 après un entreposage à l'air chaud pendant 500 h à 150°C, et/ou un faible changement de couleur ΔE, calculé selon la norme DIN EN ISO 11664-4 après un entreposage aux UV selon la norme DIN ISO 4892-2A pendant 200 h à 80°C, 340 nm et 1,55 $W/m^2$ sans arrosage, et/ou un maintien de la résistance aux chocs, mesurée selon la norme ISO180-1U, et/ou un maintien de l'allongement à la rupture, mesuré selon la norme ISO 527 après un vieillissement à l'air chaud pendant 500 h à 150°C, à condition qu'on utilise, pour 100 parties en masse d'au moins un polyamide à utiliser comme composant a) et renforcé par 5 à 200 parties en masse de fibres de verre à utiliser comme composant e),
0,1 à 3 parties en masse du composant b), 0,01 à 3 parties en masse du composant c) et 0,01 à 3 parties en masse de diphosphite de bis(2,4-di-t-butylphényl)pentaérythritol comme composant d).

**12.** Utilisation selon la revendication 11, **caractérisée en ce qu'**on utilise comme composant a) du polyamide 6 ou du

polyamide 66, comme composant b) de la 4,4'-bis($\alpha$,$\alpha$'-diméthylbenzyl)diphénylamine et comme composant c) de l'hypophosphite de sodium ou de l'hypophosphite de sodium monohydraté.

**13.** Procédé pour la diminution d'un changement de couleur $\Delta$E calculé selon la norme DIN EN ISO 11664-4 pendant 500 h à 150°C et/ou pour la diminution d'un changement de couleur $\Delta$E calculé selon la norme DIN EN ISO 11664-4 après une exposition aux UV selon la norme DIN ISO 4892-2A pendant 200 h à 80°C, 340 nm et 1,55 W/$m^2$ sans arrosage et/ou pour le maintien de la résistance au chocs à déterminer selon la norme ISO180-1U et/ou pour le maintien de l'allongement à la rupture à déterminer selon la norme ISO 527 après un vieillissement à l'air chaud pendant 500 h à 140°C, **caractérisé en ce qu'**on utilise des mélanges contenant

b) au moins une amine secondaire aromatique,
c) au moins un dérivé d'acide phosphinique de formule générale (I),

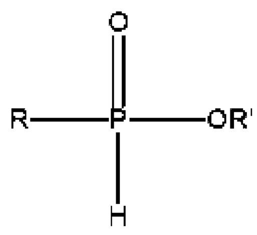

(I)

dans laquelle R représente un atome d'hydrogène ou un groupe alkyle, cycloalkyle ou aryle et R' représente un métal alcalin, un métal alcalino-terreux, un métal du groupe 12 ou 13 du système périodique des éléments, un ion d'ammonium ou un groupe $C_1$-$C_{10}$-alkyle et
d) du diphosphite de bis(2,4-di-t-butylphényl)pentaérythritol,
dans des produits à base de polyamide renforcé par des fibres de verre, à condition
qu'on utilise, pour 100 parties en masse d'au moins un polyamide à utiliser comme composant a) et 5 à 200 parties en masse des fibres de verre à utiliser comme composant e),
0,1 à 3 parties en masse du composant b), 0,01 à 3 parties en masse du composant c) et 0,01 à 3 parties en masse du composant d).

**14.** Procédé selon la revendication 13, **caractérisé en ce qu'**on utilise, comme composant a) du polyamide 6 ou du polyamide 66, comme composant b) de la 4,4'-bis($\alpha$,$\alpha$'-diméthylbenzyl)diphénylamine et comme composant c) de l'hypophosphite de sodium ou de l'hypophosphite de sodium monohydraté.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2005033185 A1
- EP 3919562 A1
- DE 102011084519 A1
- DE 4236122 A
- WO 2013083247 A1
- EP 0113229 B1
- WO 2009003976 A1


### In der Beschreibung aufgeführte Nicht-Patentliteratur


- Technische Thermoplaste, Polyamide. Kunststoff-handbuch. Karl Hansen Verlag, 1998, vol. 3/4, 16, 148-150
- **S. MOLL**. Untersuchung der Auswirkungen einer thermisch-oxidativen Beanspruchung auf das Emissionsverhalten von ABS und PP und der Korrelation mit dem Alterungsgrad. *Dissertation*, 2016
- Technische Thermoplaste, Polyamide. Kunststoff-handbuch. Karl Hansen Verlag, 1998, vol. 3/4, 16-157
- **P.H. SELDEN**. Glasfaserverstärkte Kunststoffe. , Springer-Verlag Berlin, 1967, 324-325
- Glasfaserverstärkte Thermoplaste. **P. H. SELDEN** ; **K. SCHLICHTING**. Glasfaserverstärkte Kunststoffe. Springer Verlag Berlin, 1967, 324-325
- *CHEMICAL ABSTRACTS*, 25038-54-4
- *CHEMICAL ABSTRACTS*, 32131-17-2
- *CHEMICAL ABSTRACTS*, 10081-67-1
- *CHEMICAL ABSTRACTS*, 7681-53-0
- *CHEMICAL ABSTRACTS*, 10039-56-2
- *CHEMICAL ABSTRACTS*, 26741-53-7
- *CHEMICAL ABSTRACTS*, 1309-42-8
- *CHEMICAL ABSTRACTS*, 1078142-02-5
- *CHEMICAL ABSTRACTS*, 225789-38-8
- *CHEMICAL ABSTRACTS*, 71449-76-8
- *CHEMICAL ABSTRACTS*, 156024-71-4
- *CHEMICAL ABSTRACTS*, 7681-65-4
- *CHEMICAL ABSTRACTS*, 47107-74-4
- *CHEMICAL ABSTRACTS*, 14059-33-7
- *CHEMICAL ABSTRACTS*, 1309-37-1
- *CHEMICAL ABSTRACTS*, 13463-67-7
- *CHEMICAL ABSTRACTS*, 1317-70-0
- *CHEMICAL ABSTRACTS*, 7727-43-7
- *CHEMICAL ABSTRACTS*, 1314-98-3
- *CHEMICAL ABSTRACTS*, 12014-93-6
- *CHEMICAL ABSTRACTS*, 12031-49-1
- *CHEMICAL ABSTRACTS*, 923954-49-8
- *CHEMICAL ABSTRACTS*, 2170864-77-2
- *CHEMICAL ABSTRACTS*, 817181-98-9
- *CHEMICAL ABSTRACTS*, 42844-93-9
- *CHEMICAL ABSTRACTS*, 72102-84-2
- *CHEMICAL ABSTRACTS*, 56279-27-7
- *CHEMICAL ABSTRACTS*, 13676-91-0
- *CHEMICAL ABSTRACTS*, 203576-97-0
- *CHEMICAL ABSTRACTS*, 6925-69-5
- *CHEMICAL ABSTRACTS*, 14807-96-6
- *CHEMICAL ABSTRACTS*, 98460-24-3
- *CHEMICAL ABSTRACTS*, 8013-07-8
- *CHEMICAL ABSTRACTS*, 115-83-3
- *CHEMICAL ABSTRACTS*, 557-05-1
- *CHEMICAL ABSTRACTS*, 1592-23-0
- *CHEMICAL ABSTRACTS*, 110-30-5
- Polyamide. Kunststoff-Handbuch. Carl Hanser Verlag, 1998, vol. 3/4, 374-384